# EUROPEAN PATENT APPLICATION

(11) **EP 1 333 314 A1**
(43) Date of publication of application: **06.08.2003**
(21) Application number: 01979036.9
(22) Date of filing: 06.11.2001
(51) Int. Cl.: G02F 1/133, G09F 9/00, G09G 3/20, G09G 3/36

(54) **LIQUID CRYSTAL DISPLAY APPARATUS**

(30) Priority: 08.11.2000 JP 2000340057; 09.11.2000 JP 2000341376
(71) Applicant: Citizen Watch Co. Ltd., Tokyo 188-8511 (JP)
(72) Inventor: AKIYAMA, Takashi C/O CITIZEN WATCH CO., LTD., Nishitokyo-shi, Tokyo 188-8511 (JP); TAKAHASHI, Kenichi C/O CITIZEN WATCH CO., LTD., Nishitokyo-shi, Tokyo 188-8511 (JP); WATANABE, Makoto C/O CITIZEN WATCH CO., LTD., Nishitokyo-shi, Tokyo 188-8511 (JP); YANO, Yuji C/O CITIZEN WATCH CO., LTD., Nishitokyo-shi, Tokyo 188-8511 (JP); MASUDA, Takashi C/O CITIZEN WATCH CO., LTD., Nishitokyo-shi, Tokyo 188-8511 (JP)
(74) Representative: Patentanwälte Ruff, Wilhelm, Beier, Dauster & Partner
(86) International application number: JP0109703
(87) International publication number: WO02039179

(57) **Abstract**

The invention is directed to a liquid crystal display apparatus comprising: a liquid crystal panel constructed by sandwiching a liquid crystal between a first transparent substrate having a plurality of data lines and a second transparent substrate having a plurality of scanning lines crossing the data lines; a data line driving integrated circuit connected to the plurality of data lines; and a scanning line driving integrated circuit for driving the plurality of scanning lines, wherein the data line driving integrated circuit is mounted on the first transparent electrode substrate, and the scanning line driving integrated circuit is mounted on the second transparent substrate, and wherein an swinging power supply integrated circuit for swinging a power supply potential of the scanning line driving integrated circuit while maintaining a constant amplitude in response to a liquid crystal driving AC signal is provided which is mounted directly on the first transparent substrate or on the second transparent substrate. This configuration serves to reduce the power consumption, size, and cost of the liquid crystal display apparatus, offers many advantages in design and fabrication, and enhances the reliability of the product.

## Description

### TECHNICAL FIELD

The present invention relates to a liquid crystal display apparatus having a plurality of scanning lines and a plurality of data lines arranged in a matrix array and, more particularly, to a liquid crystal display apparatus in which a power supply generating circuit employing an swinging power supply method which performs driving by swinging a power supply of a scanning line driving circuit is constructed as an integrated circuit and disposed in the vicinity of the scanning line driving circuit, and also to the circuit configuration of the swinging power supply generating circuit.

### BACKGROUND ART

In recent years, with the development of the information society, matrix-addressed display apparatuses have come to be used in a wide range of applications, such as televisions, PC monitors, navigation display apparatuses, projection display apparatuses, head-up display apparatuses, and telephone display apparatuses.

For example, EL (electroluminescence) display apparatuses and liquid crystal display apparatuses exemplified by passive addressing liquid crystal display apparatuses or active addressing (TFT, MIM, or TFD) liquid crystal display apparatuses are used as matrix-addressed display apparatuses in a variety of fields. In particular, liquid crystal display apparatuses, because of their advantages of small size, thin construction, light weight, low power consumption, etc., are prevalent in the field of small- and medium-size displays to such a degree that no other display apparatuses, including plasma display apparatuses, can rival them.

While display apparatuses that use liquid crystals or EL materials have various advantages such as small size, thin construction, light weight, and low power consumption as just described, the reality is that these advantages are not fully used, as will be explained below.

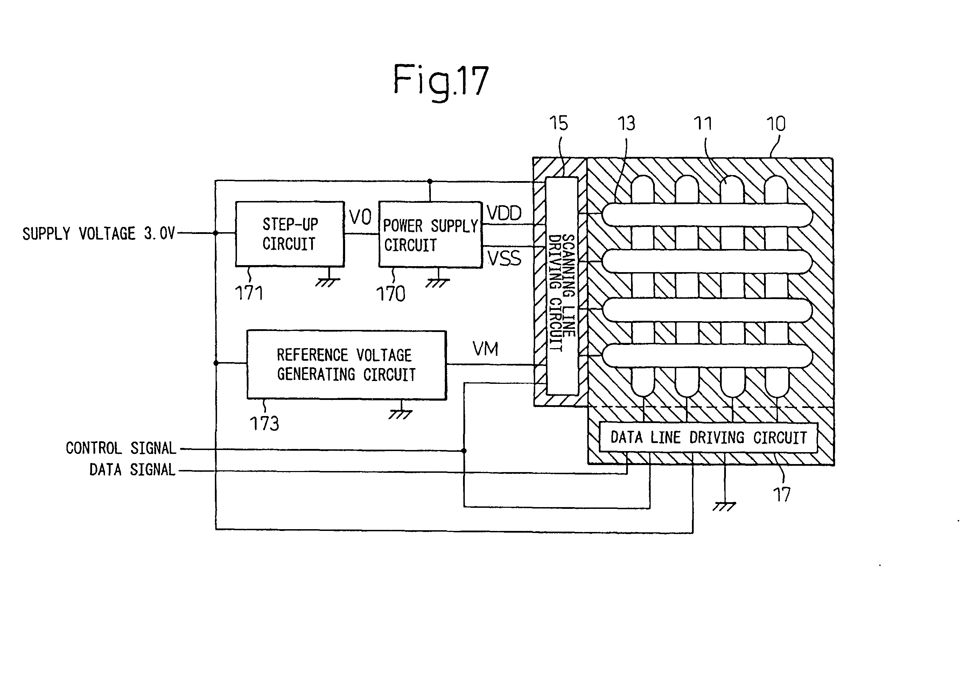

Figure 17 is a block diagram showing an essential portion of one example of a conventional art liquid crystal display apparatus. As shown, the liquid crystal display apparatus 10 comprises a data line driving circuit 17 for driving data lines 11, and a scanning line driving circuit 15 for driving scanning lines 13 which are arranged at right angles to the data lines.

As shown, a power supply voltage of 3.0 V is supplied to a step-up circuit 171 and a power supply circuit 170 as well as to the scanning line driving circuit 15; the supply voltage is also supplied to a reference voltage generating circuit 173 and the data line driving circuit 17. The step-up circuit 170 supplies a power supply voltage V0 to the power supply circuit 170, which in turn supplies scanning line driving power supply voltages VDD and VSS to the scanning line driving circuit 15 to which is also supplied a driving reference voltage VM from the reference voltage generating circuit 173. Further, a control signal is input from an LCD controller (not shown). Based on these supply voltages and the control signal, a driving signal for driving the scanning lines is applied to the scanning lines.

The data line driving circuit 17, to which the power supply voltage of 3.0 V (also called the data line driving DC voltage) is supplied, is also supplied with the control signal and data signal from the LCD controller (not shown). The data lines are driven using these supply voltages and a timing signal.

For liquid crystal display apparatuses of such a construction, since portability is an important requirement, further reduction of size is demanded from the market, while at the same time, there is a need to increase the display area for better viewability. While increasing the display area within the limited space is strongly demanded, the peripheral area of the display area is becoming increasingly smaller because of the reduction of size.

In the illustrated prior art example, the scanning line driving circuit 15 and the data line driving circuit 17, arranged at the periphery of the liquid crystal display apparatus 10, are each constructed from an integrated circuit employing a chip-on-glass structure (hereinafter called COG) in which the IC chip is mounted directly on a transparent substrate. Accordingly, in the construction of the illustrated example, the overall size of the display apparatus can be reduced by making the integrated circuits smaller and thereby reducing the peripheral area.

In one method of further reducing the peripheral area where the IC chips are mounted, it is required that the scanning line driving circuit 15 and the data line driving circuit 17 be further reduced in size; one way to achieve this is to further reduce the device size (smaller size and higher packing density) by reducing the maximum voltage of the integrated circuits.

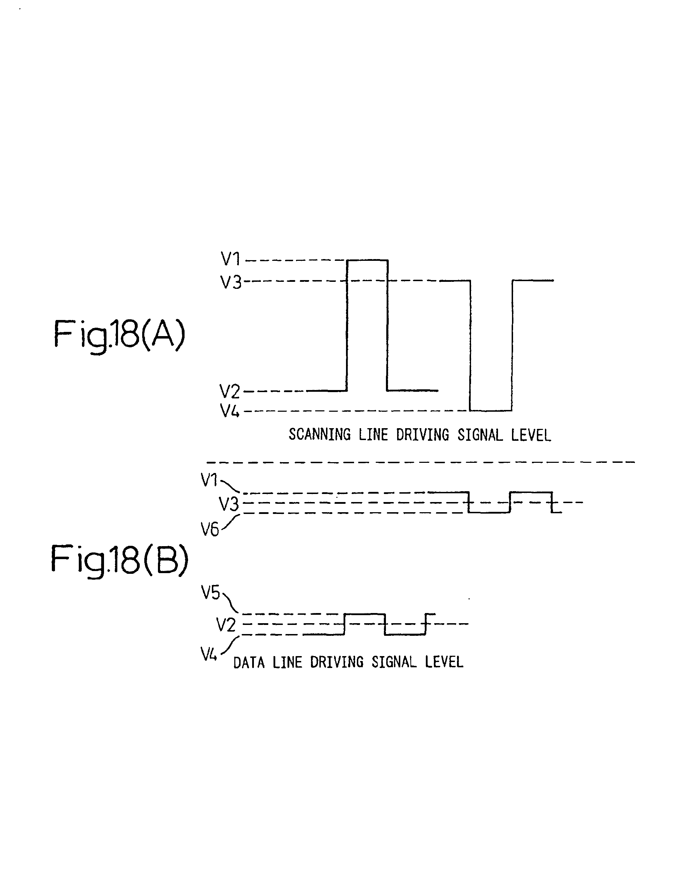

Figures 18(A) and 18(B) are driving waveform timing charts of the prior art construction. Figure 18(A) is a timing chart for the scanning line driving signal, and Figure 18(B) is a timing chart for the data line driving signal. According to the IAPT method (six-level driving method) used in the prior art, the potential is varied for AC operation of the liquid crystal, as shown; that is, the scanning line driving circuit 15 outputs a combination of V1 and V2 and a combination of V3 and V4, synchronized to which the data line driving circuit 17 outputs a combination of V5 and V4 and a combination of V1 and V6. Accordingly, the scanning line driving circuit 15 and the data line driving circuit 17 are both required to have a breakdown voltage greater than the potential difference between the highest potential level V1 and the lowest potential level V4 (that is, V1 - V4), and therefore, high-voltage integrated circuits had to be used.

That is, in the above method, the data line driving circuit 17 also has had to be constructed from a high-voltage device, and has not been suitable in terms of the size and the packing density. The prior art method also has had the problem that high-speed operation of the data line driving circuit 17, that becomes necessary to accommodate an increase in the number of data signals when the number of pixels is increased, cannot be achieved. A further problem has been that the power consumption increases because of the high-speed, high-voltage operation.

Furthermore, as the pixel pitch decreases and the number of electrode patterns increases as seen in recent liquid crystal display apparatuses, the performance of the liquid crystal cannot be fully utilized unless the driving voltage is increased with the increase in the number, n, of columns in the matrix. A high AC voltage or AC amplitude is needed to increase the contrast, raise the transmission brightness, and achieve proper grayscale display; as a result, circuitry including the power supply circuit for driving the liquid crystal must be designed with lower voltage and reduced size.

For example, to increase the contrast and achieve high transmission brightness, a high AC voltage or AC amplitude is needed for driving the liquid crystal, and a push-pull driving technique is used for an output circuit for driving the liquid crystal. One example of liquid crystal driving using the push-pull driving method is disclosed in Society of Display Bulletin Vol. 26/1, '85, pp. 9-15. In this push-pull driving method, two voltage generating circuits whose AC amplitudes are opposite in polarity are provided, and the liquid crystal device is driven by the difference between the two voltages, producing a maximum driving voltage two times as high as the power supply voltage. However, this method has had the problem that when the driving voltage of the push-pull circuit is high, if the timing of switching between the transistors connected in a push-pull configuration is displaced, a large shoot-through current flows, resulting in an increase in the power consumption of the liquid crystal driving circuit.

One driving method that solves the above-enumerated problems uses an swinging power supply method disclosed, for example, in Japanese Unexamined Patent Publication No. S60-249191 (U.S. Patent No. 4,843,252) or Japanese Unexamined Patent Publication No. H2-282788 (U.S. Patent No. 5,101,116) previously filed by the Applicant. That is, as described in the above Patent Publication, the Applicant proposed a circuit that does not require the use of a high-voltage IC, by employing a technique called the "swinging power supply method" which can obtain a driving output having a potential difference greater than the supply voltage, by creating second pulse signals having a different reference voltage level from a pulse generating signal using a clamping circuit and synthesizing them, and which does not have a potential difference greater than the supply voltage at the same point along the time axis.

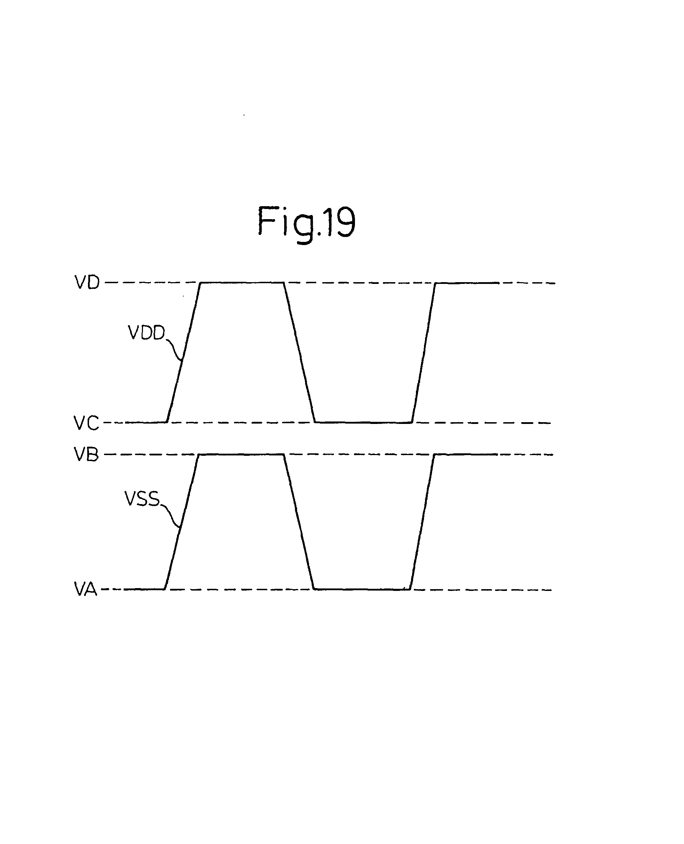

Figure 19 is a driving waveform diagram for explaining the swinging power supply method employed in the conventional art. The diagram shows the state of the power supply potential according to the swinging power supply method. As shown, the power supply (high potential power supply) VDD to be input to the positive side power supply of the scanning line driving circuit 15 is switched between VC and VD in synchronism with a pulse generating signal, while the power supply (low potential power supply) VSS to be input to the negative side power supply of the scanning line driving circuit 15 is switched between VA and VB in synchronism with the pulse generating signal. This driving method allows the breakdown voltage of the data line driving circuit 17 to be greatly reduced without increasing the breakdown voltage of the scanning line driving circuit 15, and achieves faster operation, higher packing density, and lower power consumption of the data line driving circuit 17 to provide for an increase in the number of data signals.

However, when driving the scanning line driving circuit 15 using the prior art swinging power supply method described above, the high potential power supply VDD and the low potential power supply VSS must be generated as shown in the figure. The high potential power supply VDD and the low potential power supply VSS (hereinafter, VDD and VSS sometimes referred to collectively as the "swinging power supply") are generated from the power supply circuit 170 shown in Figure 17. As described earlier, the power supply circuit 170 is supplied with the DC high voltage V0, output from the step-up circuit 171, as well as the power supply voltage of 3.0 V and ground potential (GND). Based on these voltages, the power supply circuit 170 generates the desired swinging power supply voltages VDD and VSS.

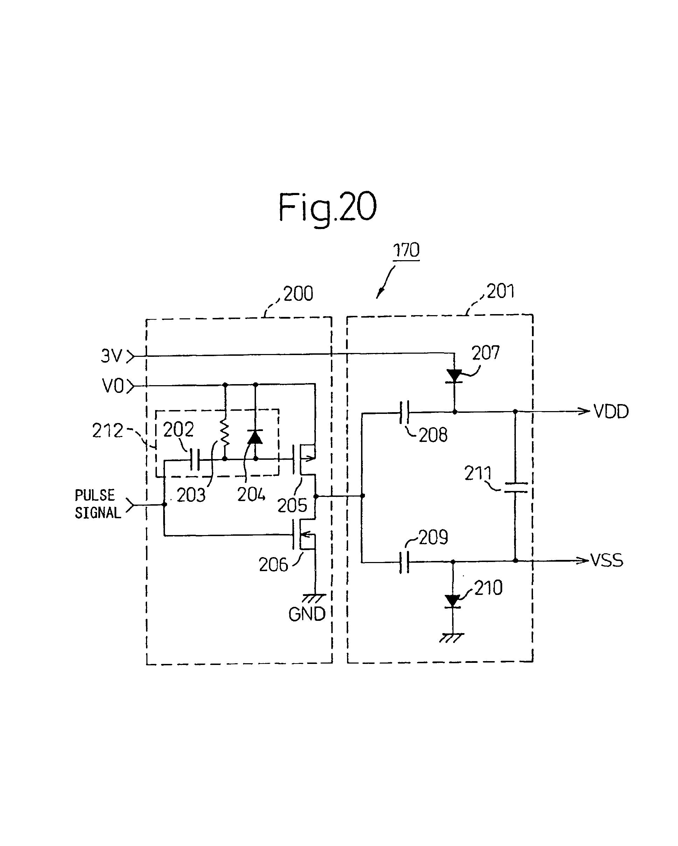

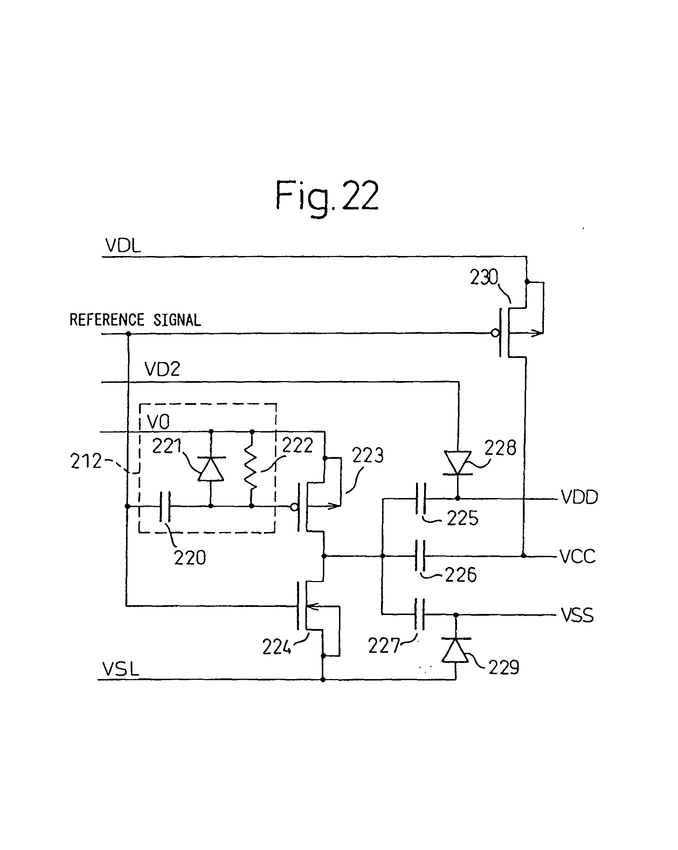

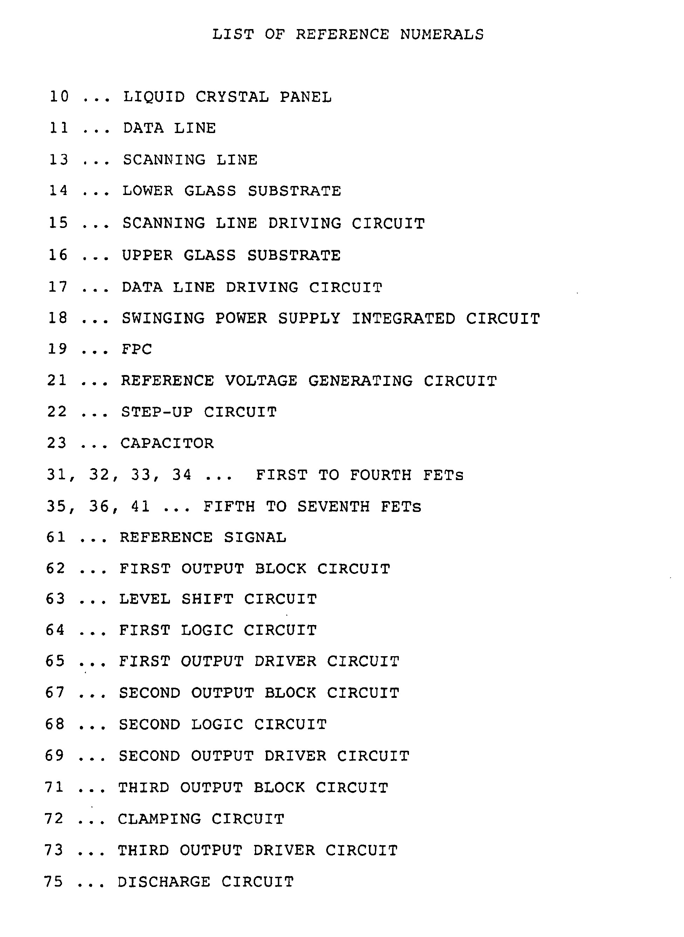

Figure 20 is a circuit diagram showing one example of the power supply circuit 170 of Figure 17; a basic circuit for generating the swinging power supply is shown here. A further detailed configuration of the circuit is given in Figure 22 to be described later.

As shown in Figure 20, the power supply circuit 170 comprises a first circuit 200 and a second circuit 201. The first circuit 200 is a pulse amplifying circuit, which converts the input pulse signal into a high-voltage pulse of amplitude V0. In the first circuit 200, a PMOS field-effect transistor (PMOS-FET) 205 and an NMOS field-effect transistor (NMOS-FET) 206 are connected in a push-pull circuit configuration using the DC high voltage V0 and GND as the power supplies, and the pulse signal is supplied to the gate of the PMOS-FET 205 via a clamping circuit 212 which comprises a capacitor 202, a resistor 203, and a diode 204. The clamping circuit 212 operates so as to clamp the high level of the pulse signal to the potential of the high-voltage V0. On the other hand, the pulse signal is supplied directly to the gate of the NMOS-FET 206. With this arrangement, the high voltage pulse amplified to V0 at the high level is output from the first circuit 200 at the timing inverted relative to the pulse signal, and is input to the second circuit 201.

The second circuit 201 is a circuit that generates the swinging power supply voltages VDD and VSS from the input high voltage pulse. In the second circuit 201, one terminal of a capacitor 208 and one terminal of a capacitor 209 are connected in common to the output of the first circuit 200. The other terminal of the capacitor 208 is connected to the cathode of a diode 207 whose anode is coupled to the power supply voltage of 3.0 V; the cathode terminal is further connected to one terminal of a capacitor 211, and the high potential swinging power supply voltage VDD is thus output. The other terminal of the capacitor 209 is connected to the anode of a diode 210 whose cathode is coupled to GND. The anode terminal of the diode 210 is further connected to the other terminal of the capacitor 211, and the low potential swinging power supply voltage VSS is thus output.

In the second circuit 201, the DC component of the high voltage pulse input from the first circuit 200 is removed by the capacitors 208 and 209, and the respective levels are clamped by the diodes 207 and 210 to produce the respective outputs. The diode 210 is connected so that the swinging power supply VSS is clamped at the high potential side to the GND level, while the diode 207 is connected so that the swinging power supply VDD is clamped, at the low potential side, to the supply voltage of 3.0 V.

In this way, the second circuit 201 generates the high potential and low potential swinging power supply voltages, the oscillation power supplies VDD and VSS varying with the amplitude of the high potential in synchronism with the pulse signal while maintaining its potential difference constant. The high potential and low potential swinging power supply voltages VDD and VSS thus generated by the power supply circuit 170 are supplied to the scanning line driving circuit 15 mounted in the liquid crystal display apparatus 10. Therefore, in the prior art swinging power supply method, all the devices constituting the scanning line driving circuit 15 must be constructed from high-voltage devices.

However, in the scanning line driving circuit 15, the only section that actually needs to be constructed from a high-voltage device is the output driver section that drives the liquid crystal device. Accordingly, the scanning line driving circuit 15 in which all the constituent devices are constructed from high-voltage devices has not been sufficient to achieve a small-size and low-power-consumption design.

In view of this, the Applicant further studied the swinging power supply method and, by noting that most of the circuit elements of the scanning line driving circuit 15 need not be constructed from high-voltage devices, aimed at reducing the size of the scanning line driving circuit 15 by constructing all the elements, other than the output driver, from low-voltage devices.

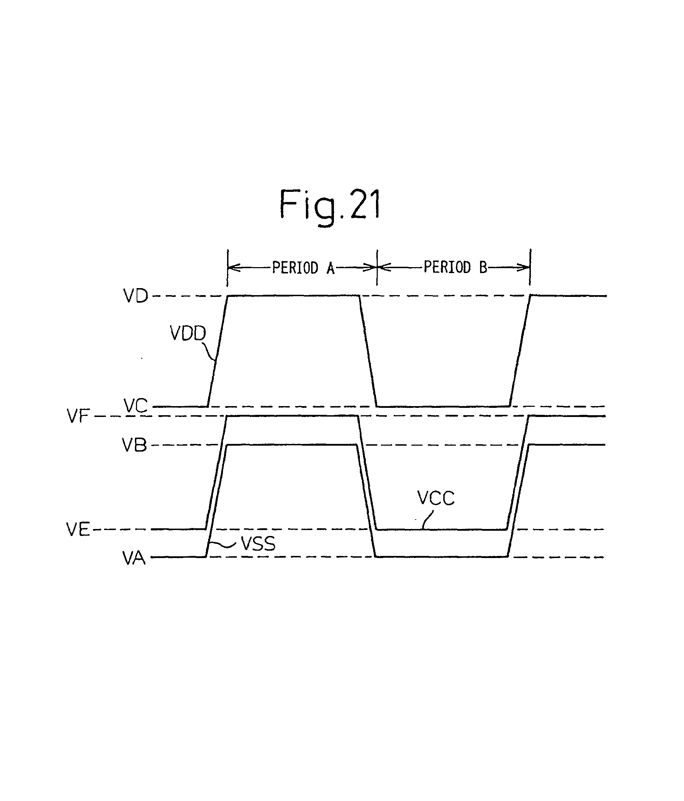

Figure 21 is a diagram for explaining the state of the power supply potential according to an swinging power supply method in which a power supply for driving the low-voltage devices is added in the prior art circuit configuration of Figure 20. The high potential power supply (VDD) and the low potential power supply (VSS) are the same in operation as those already described. The newly added low potential power supply (VCC) to be input to the scanning line driving circuit 15 is also switched between VE and VF in synchronism with the low potential power supply (VSS). In this way, the scanning line driving circuit 15 can be driven without destroying the circuits therein constructed from low-voltage devices.

Figure 22 shows one example of the circuit configuration for generating the power supply voltages according to the swinging power supply method shown in Figure 21. The configuration shown here is substantially the same as that previously shown in Figure 20, except that, in the example shown here, VDL, VSL, the reference signal, etc. are input and VCC is output.

In Figure 22, VDL is a system power supply, VSL is system ground (GND), V0 is a high-voltage power supply, and VD2 (that is, a DC voltage of 3.0 V) is a liquid crystal driving voltage to the data line driving circuit 17. The reference signal is a signal having a level intermediate between VDL and VSL, and it determines the period A and the period B in Figure 21.

The configuration and operation of Figure 22 will be described below, though the description may partially overlap with that of the circuit operation of Figure 20. In Figure 22, reference numerals 223 and 230 are PMOS-FETs, and 224 is an NMOS-FET. Further, 221, 228, and 229 are diodes, 222 is a resistor, and 220, 225, 226, and 227 are capacitors.

As shown, the reference signal is input to the capacitor 220, and the signal clamped to V0 by the clamping circuit 212 constructed with the capacitor 220, diode 221, and resistor 222 is supplied to the gate of the PMOS-FET 223. The reference signal is further input directly to the gate of the PMOS-FET 230 as well as to the NMOS-FET 224. With the PMOS-FET 223 and NMOS-FET 224 being switched based on the high level and low level of the reference signal, a voltage switching between the high potential V0 and low potential VSL is supplied to the capacitors 225, 226, and 227 connected to the output side of the push-pull circuit.

The diode 228 is connected to the other terminal of the capacitor 225, and VDD, clamped to VD2, is thus output. The diode 229 is connected to the other terminal of the capacitor 227, and VSS, clamped to VSL, is thus output. The drain of the PMOS-FET 230 is connected to one terminal of the capacitor 226, and VCC, clamped to VDL, is output in synchronism with the reference signal. With this circuit configuration, the power supply, according to the swinging power supply method, shown in Figure 21 can be generated.

However, the power supply generating circuit according to the conventional art swinging power supply method such as shown in Figures 20 and 22 has the following problems. That is, as all the components of the prior art power supply generating circuit are separate components (discrete components) such as transistors, diodes, resistors, capacitors, etc., the configuration has not been sufficient to achieve smaller size, lower power consumption, and higher versatility while utilizing the advantage of the swinging power supply method.

That is, to generate the swinging power supply with these discrete components, a circuit board for the power supply generating circuit has had to be provided separately, and this circuit board has been a bottleneck preventing further size reduction when designing the product. Furthermore, as the liquid crystal driving voltage is 20 V to 40 V, it has been necessary to use high-voltage components, which necessarily means using large-size components, and hence a problem, that the circuit area further increases, occurs.

Besides, the circuit board for the power supply generating circuit has had to be arranged separately from the liquid crystal display panel (which corresponds to the liquid crystal display apparatus 10 in Figure 17). As a result, when the manufacturer of the liquid crystal display panel is different from the designer of the liquid crystal display apparatus as the end product, there has often occurred the problem of malfunctioning due to mismatch in the specification of the swinging power supply. This problem has been solved by having the manufacturer of the liquid crystal display panel also prepare the circuit diagram of the power supply generating circuit. However, this has not only increased the burden of the manufacturer, but also limited the freedom of design of the end product, a factor preventing further reductions in cost and size. Thus, the power supply generating circuit according to the prior art swinging power supply method has had a major effect on the versatility of the liquid crystal display panel, including size reduction.

### DISCLOSURE OF THE INVENTION

Accordingly, the present invention is directed to the provision of a liquid crystal display apparatus by solving the above-enumerated problems, and the basic point of the invention is to construct the swinging power supply circuit in integrated circuit form by avoiding various technical problems and to mount the integrated circuit in the liquid crystal display apparatus.

According to the present invention, there is provided a liquid crystal display apparatus comprising: a liquid crystal panel constructed by sandwiching a liquid crystal between a first transparent substrate having a plurality of data lines and a second transparent substrate having a plurality of scanning lines crossing the data lines; a data line driving integrated circuit connected to the plurality of data lines; and a scanning line driving integrated circuit for driving the plurality of scanning lines, wherein
the data line driving integrated circuit is mounted on the first transparent electrode substrate, and the scanning line driving integrated circuit is mounted on the second transparent substrate, and wherein an swinging power supply integrated circuit for swinging a power supply potential of the scanning line driving integrated circuit while maintaining a constant amplitude in response to a liquid crystal driving AC signal is provided which is mounted directly on the first transparent substrate or on the second transparent substrate.

In a preferred embodiment, the swinging power supply integrated circuit is constructed from a single chip, and is mounted directly on the second transparent substrate.

In a preferred embodiment, the swinging power supply integrated circuit takes as inputs the liquid crystal driving AC signal and an output of a step-up circuit that defines the amplitude of the swinging power supply.

In a preferred embodiment, the swinging power supply integrated circuit comprises: three output block circuits consisting of a first output block circuit, a second output block circuit, and a third output block circuit; and one discharge block circuit, wherein
the first output block circuit comprises: a level shift circuit which converts the amplitude of an externally supplied reference signal into a prescribed amplitude; a first logic circuit which controls the timing of the reference signal whose level has been converted by the level shift circuit; and a first output driver circuit which delivers an output of the first logic circuit,
the second output block circuit comprises: a second logic circuit which controls the timing of the reference signal; and a second output driver circuit which outputs a value of the second logic circuit,
the third output block circuit comprises: a clamping circuit which clamps the reference signal; and a third output driver circuit which outputs the value of the clamping circuit, and
the discharge block circuit comprises: a detection circuit which detects the system power supply being turned off; and a discharge circuit which short-circuits the third output driver circuit by a signal detected by the detection circuit.

In a preferred embodiment, the swinging power supply integrated circuit comprises: three output block circuits consisting of a first output block circuit, a second output block circuit, and a third output block circuit; and one discharge block circuit, wherein
the first output block circuit comprises: a level shift circuit which converts the amplitude of an externally supplied reference signal into a prescribed amplitude; a first logic circuit which controls the timing of the reference signal whose level has been converted by the level shift circuit; and a first output driver circuit constructed from an inverter whose gate is connected to a signal output from the first logic circuit,
the second output block circuit comprises: a second logic circuit which controls the timing of the reference signal; and a second output driver circuit constructed from an open-drain circuit of a first PMOS-FET whose gate is connected to a signal output from the second logic circuit,
the third output block circuit comprises: a clamping circuit which clamps the reference signal; and a third output driver circuit constructed from an open-drain circuit of a second PMOS-FET whose gate is connected to a signal output from the clamping circuit, and
the discharge block circuit comprises: a detection circuit which detects a system power supply being turned off; and a discharge circuit which short-circuits the third output driver circuit by a signal detected by the detection circuit.

In a preferred embodiment, the clamping circuit has a configuration such that one end of a capacitor is connected to the supplied reference signal and the other end thereof is connected to a cathode of a first diode, one end of a first resistor, and the gate of the second PMOS-FET, while an anode of the first diode and the other end of the first resistor are connected to a source and the bulk of the second PMOS-FET.

In a preferred embodiment, the discharge block circuit has a circuit configuration such that a source and a bulk of a third PMOS-FET are connected to a source and a bulk of the first PMOS-FET, a gate of the third PMOS-FET is connected to a source and a bulk of the second PMOS-FET, and a drain of the third PMOS-FET is connected to a second resistor and a gate of a fourth PMOS-FET, while a source and a bulk of the fourth PMOS-FET are connected to the source and the bulk of the second PMOS-FET and a drain of the fourth PMOS-FET is connected to a third resistor whose one end is connected to the second resistor and a drain of the second PMOS-FET.

In a preferred embodiment, the first output block circuit comprises a plurality of PMOS-FETs and a plurality of NMOS-FETs, and an output selection circuit, having a function that can always turn off part of the plurality of PMOS-FETs and part of the plurality of NMOS-FETs by an external output setting terminal independently of the reference signal, is provided at a gate input of each of the PMOS-FETs and the NMOS-FETs.

With the above configuration, the present invention offers various effects as enumerated below.
· As the liquid crystal display apparatus can be designed by incorporating the swinging power supply integrated circuit at the time of designing the product, freedom in specification at the time of product design can be greatly enhanced. In the conventional art swinging power supply generating circuit which was constructed with discrete components and connected to the liquid crystal display apparatus after assembling them on a separate circuit board this inhibited the freedom of product design as a whole.
· As will be described later, as the scanning line driving circuit, the data line driving circuit, and the swinging power supply integrated circuit can be interconnected over an FPC board, the wiring can be greatly simplified.
· As the swinging power supply circuit is implemented in integrated circuit form and mounted in the liquid crystal display panel, the overall noise of the liquid crystal display apparatus can be reduced.
· As the swinging power supply circuit is implemented in integrated circuit form and mounted in the liquid crystal display panel, the number of components can be greatly reduced, as a result of which fabrication man-hours and fabrication costs can be reduced while greatly improving stability in fabrication.
· As the swinging power supply circuit is implemented in integrated circuit, the power consumption of the liquid crystal display apparatus can be reduced, while also reducing the overall size and weight of the product.
· Further, as will be described in detail later, as the output impedance of each driver can be easily changed by means of a setting terminal, the output impedance of the driver can be set that matches the size of the liquid crystal display panel; furthermore, if power is cut off during the selection operation of the scanning line driving circuit, the discharge circuit acts to prevent the DC component from being continuously applied.
· In a specific configuration, the swinging power supply integrated circuit employing the swinging power supply method and implemented in integrated circuit form is mounted (by means of COG) on the same substrate as the scanning line driving circuit and in the vicinity of the scanning line driving circuit, as will be described later.

### BRIEF DESCRIPTION OF THE DRAWINGS

Figure 1 is a diagram showing the basic construction of a liquid crystal display apparatus according to one embodiment of the present invention.
Figure 2 is a block diagram showing an essential portion of peripheral circuitry for driving the basic construction of Figure 1.
Figure 3 is a basic circuit diagram of an swinging power supply integrated circuit according to the invention of Figure 1.
Figure 4 is a timing chart showing driving waveforms for the liquid crystal display apparatus of Figure 1.
Figure 5 is a cross-sectional view of an essential portion for explaining the connection structure of the swinging power supply integrated circuit of Figure 1.
Figure 6 is a block diagram showing the configuration of one embodiment of the swinging power supply integrated circuit according to the present invention.
Figure 7 is a diagram for explaining the relationship between power supply voltages supplied to the swinging power supply integrated circuit of Figure 6.
Figure 8 is a circuit diagram showing one example of a level shift circuit forming part of a first output block circuit in the configuration of Figure 6.
Figure 9 is a circuit diagram showing one example of a first output driver circuit forming part of the first output block circuit in the configuration of Figure 6.
Figure 10 is a circuit diagram showing one example of a second output driver circuit forming part of a second output block circuit in the configuration of Figure 6.
Figure 11 is a circuit diagram showing one example of a clamping circuit forming part of a third output block circuit in the configuration of Figure 6.
Figure 12 is a circuit diagram showing one example of a third output driver circuit forming part of the third output block circuit in the configuration of Figure 6.
Figure 13 is a block diagram showing external capacitors connected to the swinging power supply integrated circuit of the configuration shown in Figure 6.
Figure 14 is a diagram showing the swinging power supply waveforms generated by the swinging power supply integrated circuit of the configuration shown in Figure 6.
Figure 15 is a circuit diagram showing one example of a discharge circuit in the configuration of Figure 6.
Figure 16 is a circuit diagram showing one example of a first logic circuit and the first output driver circuit forming the first output block circuit in the configuration of Figure 6.
Figure 17 is a diagram showing a liquid crystal display apparatus according to the conventional art.
Figures 18(A) and 18(B) are timing charts illustrating basic driving waveforms for the prior art liquid crystal display apparatus shown in Figure 17.
Figure 19 is a basic waveform diagram illustrating driving waveforms for the liquid crystal display apparatus of Figure 17 employing an swinging power supply method according to the prior art.
Figure 20 is a basic circuit diagram of a conventional art swinging power supply circuit used in Figure 17.
Figure 21 is a diagram for explaining the state of power supply potential according to a conventional art swinging power supply method in which a power supply for driving low-voltage devices is added.
Figure 22 is a diagram showing one example of a circuit for generating power supply voltages according to the prior art swinging power supply method.

### BEST MODE FOR CARRYING OUT THE INVENTION

The preferred embodiments using the liquid crystal display apparatus of the present invention will be described below with reference to the accompanying drawings.

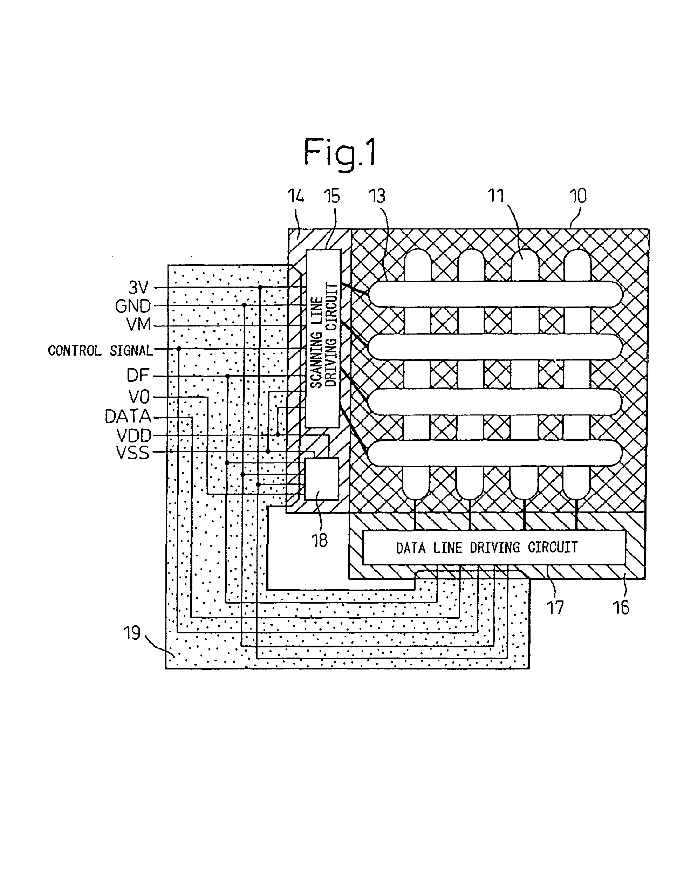

Figure 1 is a diagram showing the basic construction of the liquid crystal display apparatus according to one embodiment of the present invention. A liquid crystal display panel 10 is constructed by laminating an upper glass substrate 16, on which data lines 11 made of transparent electrodes of ITO are formed, to a lower glass substrate 14, on which scanning lines 13 made of transparent electrodes of ITO are formed, and by bonding the two substrates together using a sealing member.

A liquid crystal is sandwiched between the lower glass substrate 14 and the upper glass substrate 16, and each glass substrate is coated with an alignment film (not shown) to align the liquid crystal molecules in the desired direction. A data line driving circuit 17 for driving the data lines 11 is mounted on the lower glass substrate 14 using a COG (chip-on-glass) technique. Likewise, a scanning line driving circuit 15 is mounted on the upper glass substrate 14 using the COG technique, and is electrically connected to the scanning lines 13.

In this embodiment of the invention, an swinging power supply integrated circuit 18, which is an integrated circuit (IC) implementation of a power supply generating circuit for generating an swinging power supply, is also mounted on the lower glass substrate 14 using the COG technique. Accordingly, input/output terminals of the swinging power supply integrated circuit 18 are electrically connected to the ITO formed on the lower glass substrate 14.

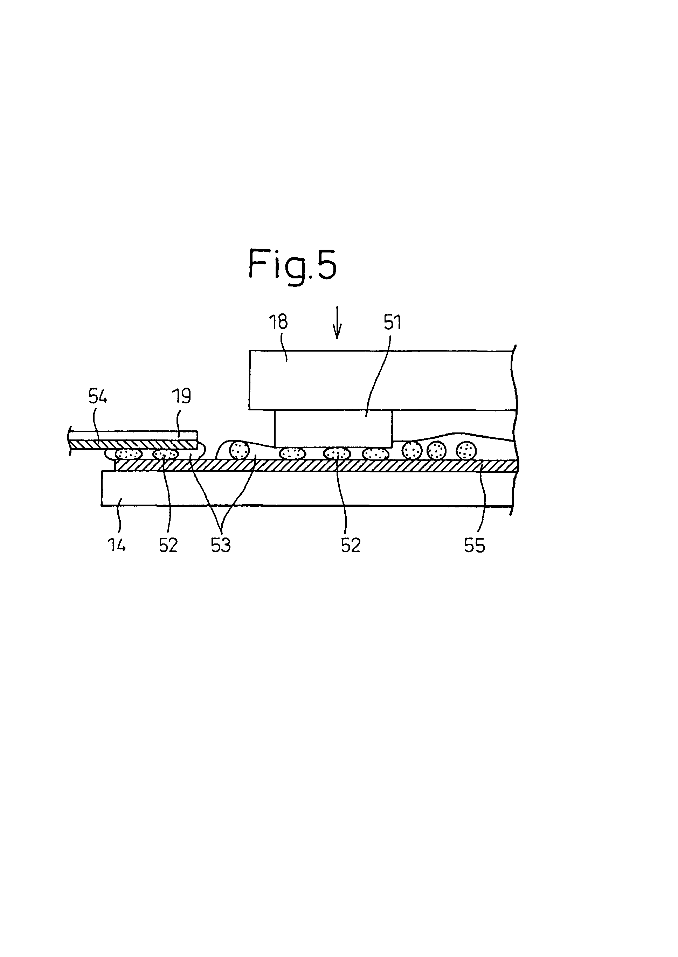

The COG mounting essential to the implementation of the swinging power supply integrated circuit 18 of the present invention will be described first with reference to Figure 5.

Figure 5 is a cross-sectional view of an essential portion for explaining the connection structure of the swinging power supply integrated circuit 18 of Figure 1. More specifically, the cross-sectional view shows the essential portion where the swinging power supply integrated circuit 18 of Figure 1 is mounted using the COG technique. In Figure 5, bump electrodes 51 are formed on the swinging power supply integrated circuit 18. In the present embodiment, each bump electrode 51 is formed from Au. The bump electrodes may be formed from other electrically conductive materials. The bump electrode 51 is electrically connected to the lower glass substrate 14 via an anisotropic conductive film (hereinafter abbreviated as ACF). The ACF comprises conductive particles 52 and a thermosetting nonconductive adhesive material 53; when the swinging power supply integrated circuit 18 is pressed under heat in the direction indicated by arrow, the bump electrode 51 is pressed against the conductive particles 52 which are crushed to provide an electrical connection to the ITO wiring 55 formed on the lower glass substrate 14 and, in this condition, the adhesive material 53 is cured to maintain the connection. Here, conductive particles coated with thin insulating films (not shown) may be used instead of the conductive particles 52.

In the COG mounting of the swinging power supply integrated circuit 18 on the lower glass substrate 14 described above, the input/output terminals and power supply terminals of the scanning line driving circuit 15, data line driving circuit 17, and swinging power supply integrated circuit 18 in Figure 1 are electrically connected on the respective glass substrates to a flexible printed circuit board (hereinafter abbreviated as FPC) 19 via the ITO wiring formed on the respective glass substrates.

Usually, in the fabrication of the FPC 19, wiring patterns are formed using copper foil on both surfaces of a substrate made of a 150-µm thick polyimide base material, and the wiring patterns on both surfaces are interconnected at suitable places via through-holes to complete the circuit wiring. Using such wiring patterns, the power supply and control signal lines common to the scanning line driving circuit 15, data line driving circuit 17, and swinging power supply integrated circuit 18 in Figure 1 are wired over the FPC 19 in such a manner as to minimize the number of external connection terminals.

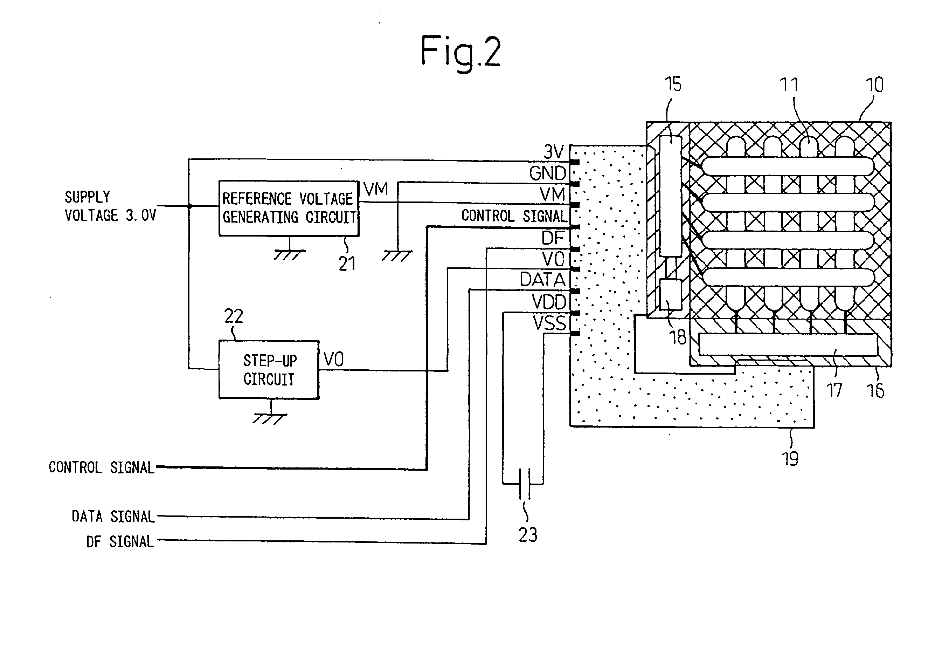

Next, referring to Figures 1 and 2, the wiring on the FPC 19 will be described below in the order of the external connection terminals arranged on the FPC 19. The first terminal is for providing a power supply voltage of 3.0 V, which is used as a logic power supply for the scanning line driving circuit 15, a clamping power supply for the swinging power supply integrated circuit 18, and a logic power supply and data line driving power supply for the data line driving circuit 17. The second terminal is used as ground (GND), and is connected to the GND terminal of each of the above-listed power supply terminals. The third terminal is for a driving reference power supply VM which provides the reference voltage for the liquid crystal driving voltage and is supplied to the scanning line driving circuit 15.

The fourth terminal is for a control signal; the control signal comprises a group of three signals, that is, a latch pulse LP which provides scan timing, a frame signal FR which provides frame timing, and a clock pulse CP which provides timing for transferring a data signal DATA to the data line driving circuit 107. In Figure 1, these signals are collectively shown as the "control signal". The FPC 19 supplies the respective control signals, i.e., the latch pulse LP to the scanning line driving circuit 15 and the data line driving circuit 17, the frame signal FR to the scanning line driving circuit 15, and the clock pulse CP to the data line driving circuit 17.

The fifth terminal is for a timing signal DF which provides polarity inversion timing for the liquid crystal, and which is supplied to the scanning line driving circuit 15, swinging power supply integrated circuit 18, and data line driving circuit 17. The sixth terminal is an input terminal V0 of a high-voltage DC power supply for driving the liquid crystal, which is supplied to the swinging power supply integrated circuit 18. The seventh terminal is a DATA terminal which is connected to the data line driving circuit 17 to transfer image data. The eighth terminal is a power supply terminal for a high potential supply voltage VDD, and the ninth terminal is for a low potential power supply voltage VSS; these voltages are supplied from the swinging power supply output terminals of the swinging power supply integrated circuit 18, and delivered as the VDD power supply and the VSS power supply, respectively, to the scanning line driving circuit 15.

As described above, the terminals connecting to the respective circuits 15, 17, and 18 are arranged on the FPC 19 so as to minimize the number of external connection terminals. Reducing the number of terminals not only serves to reduce the overall size of the apparatus, but also offers such effects as reducing the cost of connectors, simplifying the connection work, and improving the connection reliability. In the present embodiment, the respective circuits are interconnected via the FPC 19 by mounting the swinging power supply integrated circuit 18 on the lower glass substrate 14 by means of COG as described above.

Figure 2 is a block diagram showing an essential portion of peripheral circuitry for driving the basic construction of Figure 1. A reference voltage generating circuit 21, a step-up circuit 22, a capacitor 23, etc. are connected to the construction illustrated in Figure 1. The power supply voltage of 3.0 V is provided to the reference voltage generating circuit 21 and the step-up circuit 22 as well as to the corresponding terminal of the FPC 19, while the control signal (the logic signal group consisting of the scan timing signal, frame signal, data latch timing, etc. as earlier described), the data signal, the DF signal, etc. are supplied to the respective terminals of the FPC 19.

The DF signal as the liquid crystal driving AC signal is supplied to the DF terminal of the FPC 19, the data signal as the image data is supplied to the DATA terminal of the FPC 19, the output V0 of the step-up circuit 22 is supplied to the V0 terminal of the FPC 19, and the output VM of the reference voltage generating circuit 21 is connected to the VM terminal of the FPC 19. The grounds of the reference voltage generating circuit 21 and the step-up circuit 22 are connected to the GND terminal of the FPC 19. The multilayer ceramic capacitor 23 with a capacitance of 1 µF is connected between the VDD terminal and VSS terminal of the FPC 19.

The operation of each circuit block will be described below. The reference voltage generating circuit 21 is a circuit for generating the reference voltage VM for the driving voltage of the liquid crystal display panel 10, and generates a DC voltage of 3.0 V to 1.5 V using a series regulator. Instead of the series regulator, a switching capacitor type or a step-down switching regulator or the like can be used to generate the required voltage, but the present embodiment employs a series regulator which can be constructed with the fewest number of components.

The step-up circuit 22 is a circuit for generating the DC high voltage V0 from the power supply voltage of 3.0 V, and is constructed from a step-up switching regulator. In the present embodiment, the step-up circuit 22 incorporates a liquid crystal temperature compensating circuit (not shown), and is designed to output 20 V at room temperature with a temperature coefficient of -0.4V/°C. Various methods are proposed for the construction of a circuit comprising a combination of a temperature compensating circuit and a switching regulator; in the present embodiment, the circuit is implemented by using a thermistor for the output voltage dividing resistor of the switching regulator circuit. With this configuration, the output voltage V0 of the step-up circuit 22 changes with temperature so that the liquid crystal display apparatus 10 can always produce a display with optimum contrast. A switching regulator is used as the step-up circuit 22, but if an increase in the number of components is permitted, a charge pump type step-up circuit may be used.

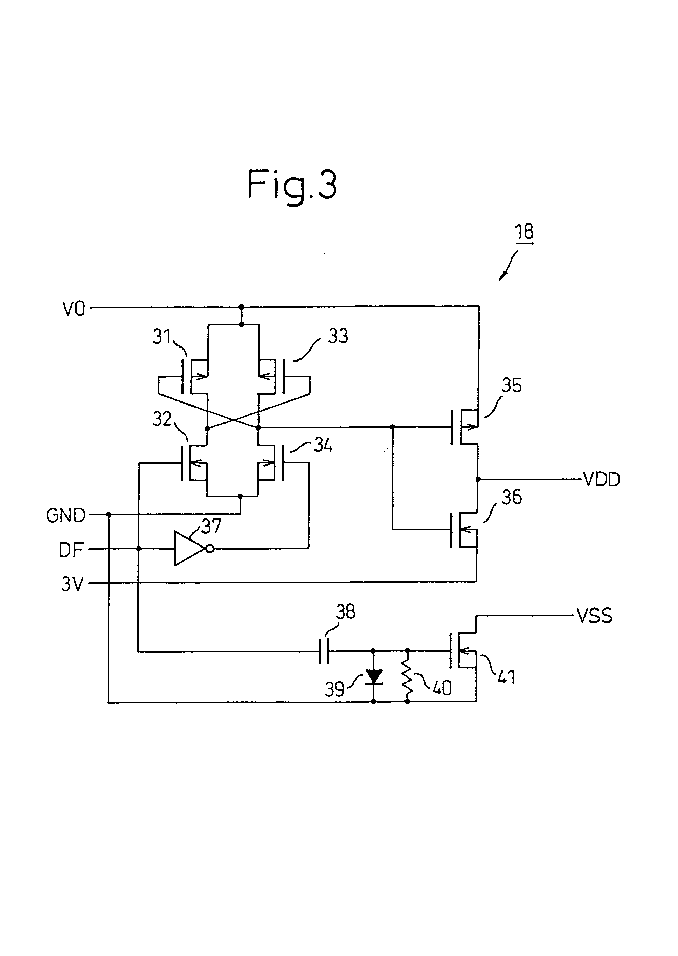

Figure 3 is a basic circuit diagram of the swinging power supply integrated circuit according to the invention of Figure 1. As described above, the swinging power supply generating circuit according to the present invention is constructed, in an integrated circuit form, as the swinging power supply integrated circuit 18. That is, the power supply generating circuit for generating the swinging power supply from the supply voltage of 3.0 V and the DC high voltage V0 is designed in integrated circuit form and formed on a silicon substrate.

The operation of this circuit will be described below. A level shift circuit is constructed using four FETs, i.e., a PMOS-FET 31, a PMOS-FET 33, an NMOS-FET 32, and an NMOS-FET 34.

As shown, the sources of the PMOS-FET 31 and PMOS-FET 33 are connected to the power supply line of the DC high voltage V0, the gate of the PMOS-FET 31 is connected to the drain of the PMOS-FET 33, and the gate of the PMOS-FET 33 is connected to the drain of the PMOS-FET 31. Further, the drain of the NMOS-FET 32 is connected to the drain of the PMOS-FET 31, and the drain of the NMOS-FET 34 is connected to the drain of the PMOS-FET 33.

The sources of the NMOS-FET 32 and NMOS-FET 34 are connected to GND, the gate of the NMOS-FET 32 is connected to the input signal DF, and the gate of the NMOS-FET 34 is connected to the output of an inverter 37. The DF signal is coupled to the input of the inverter 37. The level shift circuit is constructed with the above connections, and the DF signal that is input at GND to 3.0V levels is amplified and converted into a signal having GND to V0 levels but identical in phase to the DF signal.

An output buffer for outputting the swinging power supply VDD is constructed by connecting a PMOS-FET 35 and an NMOS-FET 36 in an inverter configuration. The source of the PMOS-FET 35 is connected to the power supply line of the DC high voltage V0, while the source of the NMOS-FET 36 is connected to the power supply line of the supply voltage of 3.0 V. The DF signal amplified and converted to the GND to V0 levels, and output from the level shift circuit, is supplied to the input of the output buffer. During the period that the supplied DF signal is at a high level, that is, the potential of V0, the NMOS-FET 36 is ON and the PMOS-FET 35 is OFF, so that 3.0 V is output as the VDD.

On the other hand, during the low level period in which the DF signal takes the GND potential, the PMOS-FET 35 is ON and the NMOS-FET 36 is OFF, so that the voltage of V0 is output as the VDD. In this way, in synchronism with the DF signal, the DC high voltage V0 and the power supply voltage of 3.0 V are alternately selected for output as the VDD. This VDD is the positive side output of the swinging power supply.

In Figure 3, a PMOS-FET 41 is a clamping transistor, which acts to add DC potential to the AC voltage when the swinging power supply VDD is capacitively coupled by an externally added capacitor. In the construction of the clamping circuit, the source of the PMOS-FET 41, the cathode of a diode 39, and one end of a resistor 40 are connected to the GND line, and the anode of the diode 39, the other end of the resistor 40, and one end of a capacitor 38 are connected to the gate of the PMOS-FET 41. The other end of the capacitor 38 is coupled to the DF signal.

The capacitor 38 is a MOS capacitor which is integrated on the semiconductor integrated circuit, and is chosen to have a capacitance of 470 pF. The resistor 40 is formed from polysilicon and is chosen to have a resistance of 2M to 5M Ω. These values must be chosen so that the time constant τ expressed by the product of the capacitance and the resistance value will become sufficiently longer than the switching time of the swinging power supply. If it is shorter, the gate voltage of the PMOS-FET 41 drops and a sufficient ON resistance cannot be obtained. The circuit configuration of the swinging power supply integrated circuit 18 has been described above.

The liquid crystal display apparatus of the present invention is implemented by mounting the above-described swinging power supply integrated circuit 18 using the COG technique. The circuit described above is one example of the circuit for generating the swinging power supply and, if one refers to this embodiment, one can implement the circuit in like manner using a circuit configuration other than the one described above. By implementing the circuit as a semiconductor integrated circuit, the invention can be carried out in like manner as the circuit can be mounted using the COG technique. Further, as long as it is implemented as a semiconductor integrated circuit, the circuit may be constructed from multiple chips. However, from the standpoint of reducing the cost and size, it is advantageous to construct the circuit from one chip as in the present embodiment.

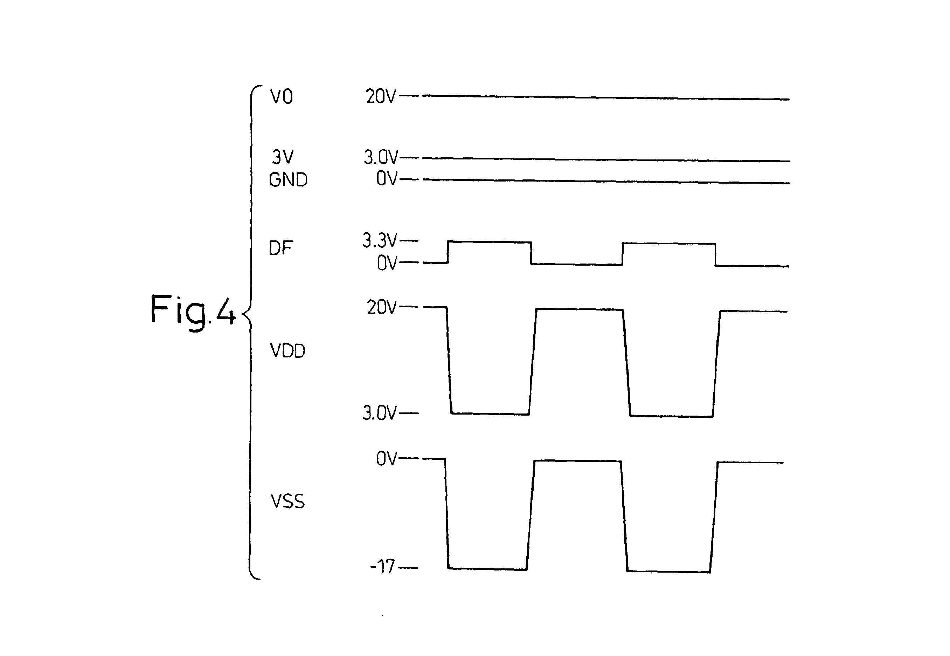

Figure 4 is a timing chart showing the driving waveforms for the liquid crystal display apparatus of Figure 1. As the V0 terminal of the FPC 19 is connected to the output of the step-up circuit 22, 20 VDC is input as V0. Further, 3.0 V and 0 V are input to the 3.0V and GND terminals, respectively. The DF signal as the liquid crystal polarity inversion signal is input to the DF terminal; this signal is a rectangular wave which is 3.3 V at high level and 0 V at low level. These are the waveforms at the input terminals.

As previously shown in Figure 1, the power supply voltages V0, 3.0 V, and GND and the DF signal, input at the respective input terminals of the FPC 19, are input to the swinging power supply integrated circuit 18. Further, as shown in Figure 3, the input DF signal is converted into a rectangular wave that takes voltage levels of V0 and 0 V, by the level shift circuit comprising the PMOS-FETs 31 and 33 and the NMOS-FETs 32 and 34. The converted DF signal is input into the output buffer which produces the swinging power supply VDD by alternately selecting the voltage levels of V0 and 3.0 V in synchronism with the DF signal. The output waveform of this swinging power supply VDD is shown in Figure 4.

When the DF signal is at the high level, VDD outputs 3.0 V, and when it is at the low level, VDD outputs 20 V as V0. Further, as shown in Figure 2, the swinging power supply VDD is connected to the VSS terminal of the FPC 19 via the capacitor 23. This VSS terminal is connected to the VSS terminal of the swinging power supply integrated circuit 18, which means that the swinging power supply VDD is input to the VSS terminal in Figure 2 via the capacitor 23. As VDD is input via the capacitor 23, an AC voltage produced by removing the DC component from the swinging power supply VDD is applied to the VSS terminal. On the other hand, the VSS terminal is also the drain output of the PMOS-FET 41.

Here, when the DF signal is at a low level, the PMOS-FET 41 is ON, and 0 V is applied to the VSS terminal. At this time, the potential at the VSS terminal side of the capacitor 23 is charged to 0 V. As a result, as shown in Figure 4, during the low level period of the DF signal, 0 V is output at the VSS terminal. Next, when the DF signal goes to the high level, the PMOS-FET 41 turns off. At the same time, the potential of the swinging power supply VDD connected to the other side of the capacitor 23 drops, by 17 V, from 20 V to 3.0 V.

As a result, the potential at the VSS terminal side of the capacitor 23 also drops from 0 V to -17 V. Accordingly, as shown in Figure 4, the VSS terminal outputs 0 V during the low level period of the DF signal, and -17 V during the high level period. This provides the swinging power supply VSS. As is apparent from Figure 1, the oscillation power supplies VDD and VSS are connected via the FPC 19 to the power supply terminals of the scanning line driving circuit 15. The scanning line driving circuit 15 can thus be driven by the oscillation power supplies.

According to the present embodiment, all the voltages input to the respective power supply terminals of the FPC 19 are DC voltages, and the capacitor 23 connected between VDD and VSS is constructed from a conventional ceramic capacitor. In this way, when viewed from the external circuits, it can be seen that the apparatus can be driven by simple circuitry that just applies a DC low voltage and a DC high voltage.

Further, as the need is eliminated for the external circuit board as required in the conventional art swinging power supply method for the power supply circuit constructed from discrete components, as previously described, drastic reductions in the cost and the size of the circuit board can be achieved. Furthermore, as the swinging power supply integrated circuit 18 is mounted in the liquid crystal display apparatus by using the COG technique as previously described, the manufacturer can supply the apparatus to the user by designing the liquid crystal panel and the swinging power supply circuit in optimum condition free from trouble such as malfunctions; therefore, the user need only prepare a simple DC power supply, and the liquid crystal display apparatus can be driven using the swinging power supply method in exactly the same way as before.

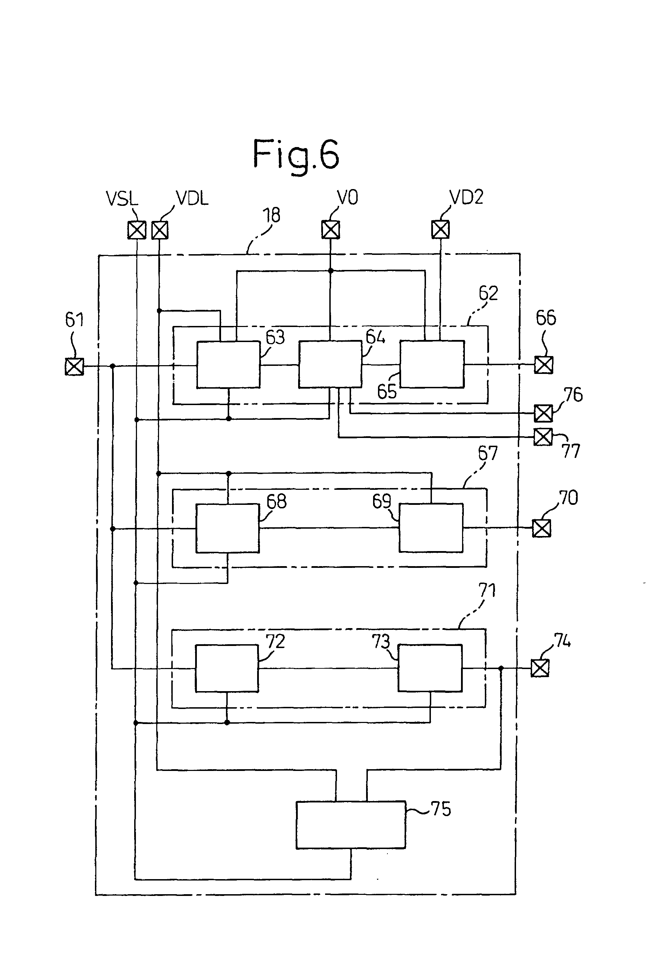

Figure 6 is a block diagram showing the configuration of one embodiment of the swinging power supply integrated circuit 18 according to the present invention. Four kinds of power supply voltages, VSL, VDL, VD2, and V0, are input to the swinging power supply integrated circuit 18. As previously described, VSL is system ground, VDL is a system power supply, VD2 is a liquid crystal driving voltage to the data line driving circuit 17, and V0 is a high-voltage power supply based on which to produce the swinging power supply. Here, VSL in Figure 6 corresponds to GND in Figure 3, and VDL and VD2 in Figure 6 both correspond to 3 V in Figure 3. The detailed configuration of each block will be described below with reference to the figure.

In the figure, reference 61 indicates the reference signal; the low level potential is VSL, and the high level potential is VDL. The reference signal 61 in Figure 6 corresponds to DF in Figure 3. Reference numeral 62 is a first output block circuit, 67 is a second output block circuit, and 71 is a third output block circuit. The reference signal 61 is supplied to all the output block circuits.

Further, reference numerals 66, 70, 74, etc. indicate the outputs of the swinging power supply integrated circuit 18, that is, 66 indicates the output (VDD) of the first output block circuit 62, 70 the output (VCC) of the second output block circuit 67, and 74 the output (VSS) of the third output block circuit 71. On the other hand, reference numerals 76 and 77 indicate the output setting terminals of a first logic circuit 64, which are used within the circuit.

The first output block circuit 62 comprises three circuit blocks, i.e., a level shift circuit 63, the first logic circuit 64, and a first output driver circuit 65.

The level shift circuit 63 (which corresponds to the level shift circuit (FETs 31, 32, 33, and 34) in Figure 3) is a circuit that amplifies and converts the signal levels VDL and VSL of the reference signal 61 into the V0 and VSL levels, respectively.

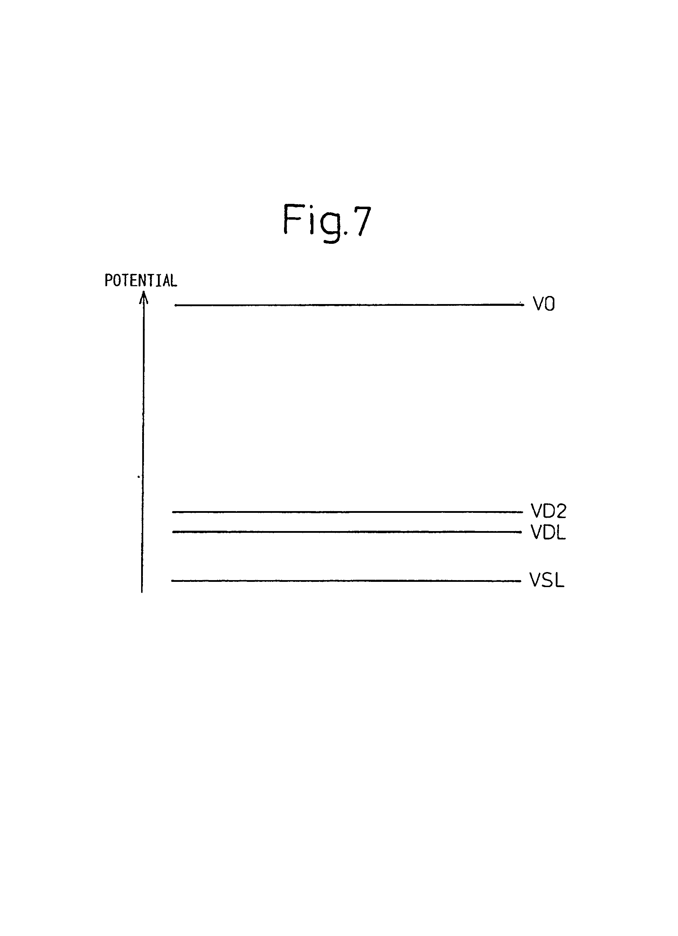

Figure 7 is a diagram for explaining the relationship between the power supply voltages supplied to the swinging power supply integrated circuit of Figure 6. In general, the relations V0>VD2 and VDL>VSL hold. As earlier described, when VSL is 0 V, then V0 is about 20 V, VD2 is about 3.0 V, and VDL is about 2.7 V. However, the voltages shown here greatly vary depending on the ambient temperature, the liquid crystal used, the system design of the liquid crystal display apparatus, etc.

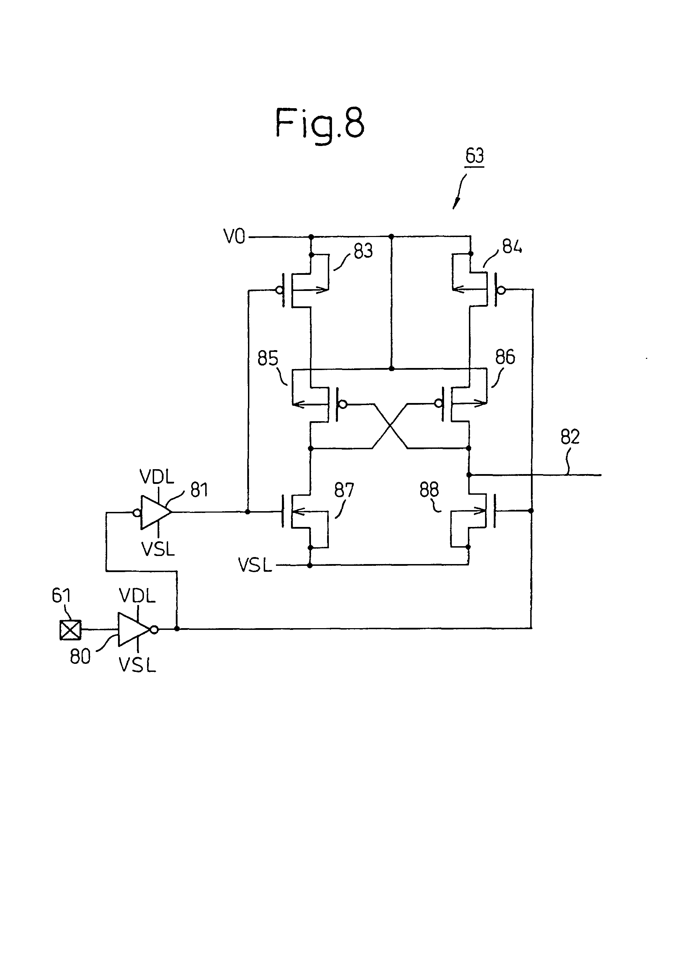

Figure 8 is a circuit diagram showing one example of the level shift circuit forming part of the first output block circuit in the configuration of Figure 6. The circuit shown here is an alternative example of the level shift circuit contained in the previously described circuit of Figure 3. Reference numerals 80 and 81 are inverters to which the power supply voltages VDL and VSL are input. The reference signal 61 is also input to the inverter 80, whose output is connected to the inverter 81.

Reference numerals 83, 84, 85, and 86 are PMOS-FETs, and 87 and 88 are NMOS-FETs. The bulk side of each of the PMOS-FETs is connected to the power supply line of V0, and the sources of the PMOS-FETs 83 and 84 are also connected to the power supply line of V0. The drain of the PMOS-FET 83 is connected to the source of the PMOS-FET 85, and the drain of the PMOS-FET 84 is connected to the source of the PMOS-FET 86.

The drain of the PMOS-FET 85 is connected to the gate of the PMOS-FET 86 as well as to the drain of the NMOS-FET 87, and the drain of the PMOS-FET 86 is connected to the gate of the PMOS-FET 85 as well as to the drain of the NMOS-FET 88. The source and bulk side of the NMOS-FETs 87 and 88 is connected to VSL.

The output of the inverter 81 is connected to the gates of the PMOS-FET 83 and NMOS-FET 87, while the output of the inverter 80 is connected to the gates of the PMOS-FET 84 and NMOS-FET 88.

Reference numeral 82 indicates the output signal of the level shift circuit 63. When the reference signal 61 is at VDL, the NMOS-FET 87 is conducting and the NMOS-FET 88 is non-conducting, so that the output voltage 82 is V0. Conversely, when the reference signal 61 is at VSL, the NMOS-FET 87 is non-conducting and the NMOS-FET 88 is conducting, so that VSL is output as the output signal 82.

In this way, the level shift circuit 63 converts the VDL/VSL amplitude of the reference voltage 61 into the V0/VSL amplitude, and the resulting output signal 82 is input to the first logic circuit 64.

As shown in Figure 6, two kinds of supply voltages, V0 and VSL, are input to the first logic circuit 64, and the output signal from the level shift circuit 63 is processed by the logic circuit described later. The first logic circuit 64 can be constructed in various configurations according to its purpose such as power consumption reduction, but its simplest operation purpose is to switch the first output driver circuit 65. Therefore, in its simplest configuration, it can be constructed with a single buffer which switches between V0 and VSL.

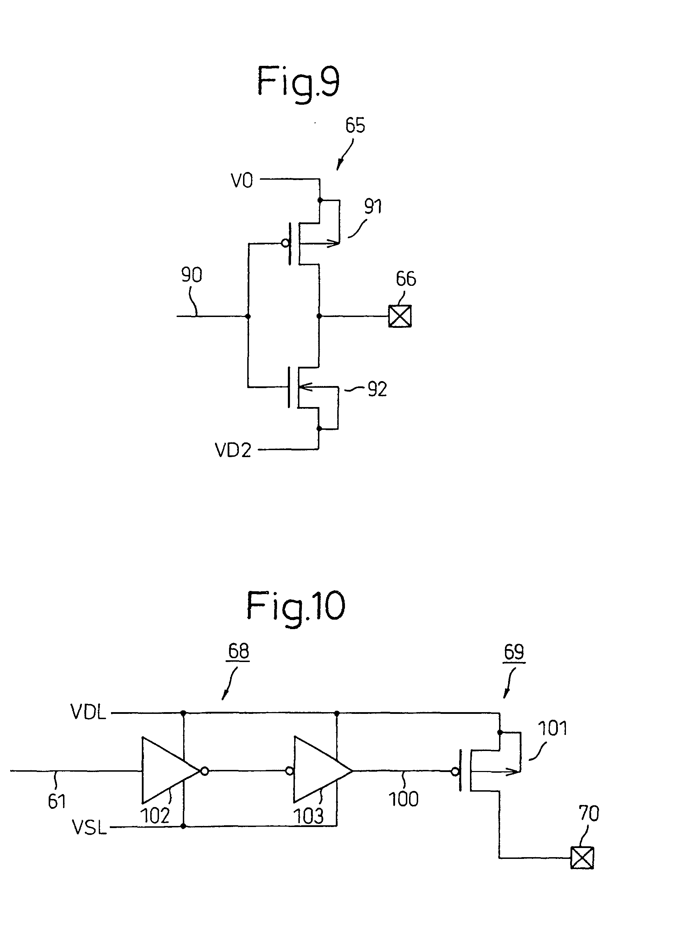

The signal processed by the first logic circuit 64 is input to the first output driver circuit 65. The first output driver circuit 65 is supplied with two supply voltages V0 and VD2. Like the first logic circuit 64, the first output driver circuit 65 can also be constructed in various configurations according to its purpose such as power consumption reduction, output impedance setting, etc. One example of the simplest circuit configuration is shown in Figure 9.

Figure 9 is a circuit diagram showing one example of the first output driver circuit in the configuration of Figure 6. Reference numeral 91 is a PMOS-FET, and 92 is an NMOS-FET. The source and bulk side of the PMOS-FET 91 is connected to the power supply line of V0, and its drain is connected to the drain of the NMOS-FET 92 whose source and bulk side is connected to the power supply line of VD2. Further, reference numeral 90 indicates the output signal of the first logic circuit 64.

When the output signal 90 from the first logic circuit 64 is V0, the NMOS-FET 92 in the first output driver circuit 65 conducts and VD2 is output as the VDD 66, while when the output signal 90 is VSL, the PMOS-FET 91 conducts and V0 is output.

To recapitulate the operation of the first output block circuit 62, when the reference signal is at VDL, VD2 is output as the VDD 66, and when the reference signal is at VSL, V0 is output as the VDD 66.

Next, the operation of the second output block circuit 67 will be described with reference to Figure 6. The second output block circuit 67 comprises two circuit blocks 68 and 69, i.e., the second logic circuit 68 and the second output driver circuit 69 constructed from an open-drain circuit of a first PMOS-FET.

VDL and VSL are input to the second logic circuit 68 to which is also input the reference signal 61 as a signal. The second logic circuit 68 comprises, for example, several inverter stages, and more specifically, an even number of inverter stages, as shown in the first half of Figure 10.

The output of the second logic circuit 68 is coupled to the second output driver circuit 69. The detailed circuit configuration of the second output driver circuit 69 is shown in the second half of Figure 10.

Figure 10 shows one example of the circuit configuration of the second output driver circuit. Reference numeral 101 indicates a PMOS-FET. Reference numeral 100 is the output of the second logic circuit 68, which is coupled to the gate of the PMOS-FET 101. The source and bulk side of the PMOS-FET 101 is connected to VDL. The drain of the PMOS-FET 101 is connected to the VCC 70; as a result, the VCC 70 is the open-drain output of the PMOS-FET 101. The second logic circuit 68 comprises, for example, inverters 102 and 103 to which the reference signal 61 is input, as shown in the figure.

Accordingly, in the second output block circuit 67, when the reference signal 61 is at VDL, the PMOS-FET 101 is non-conducting and the VCC 70 (see Figure 6) is therefore put in a high impedance state; on the other hand, when the reference signal 61 is at VSL, the PMOS-FET 101 is conducting and the VCC 70 outputs VDL.

Next, the operation of the third output block circuit 71 will be described with reference to Figure 6. The third output block circuit 71 comprises two circuit blocks 72 and 73, i.e., the clamping circuit 72 for clamping the reference signal 61 and the third output driver circuit 73 constructed from an open-drain circuit of a PMOS-FET. The detailed configuration will be described below.

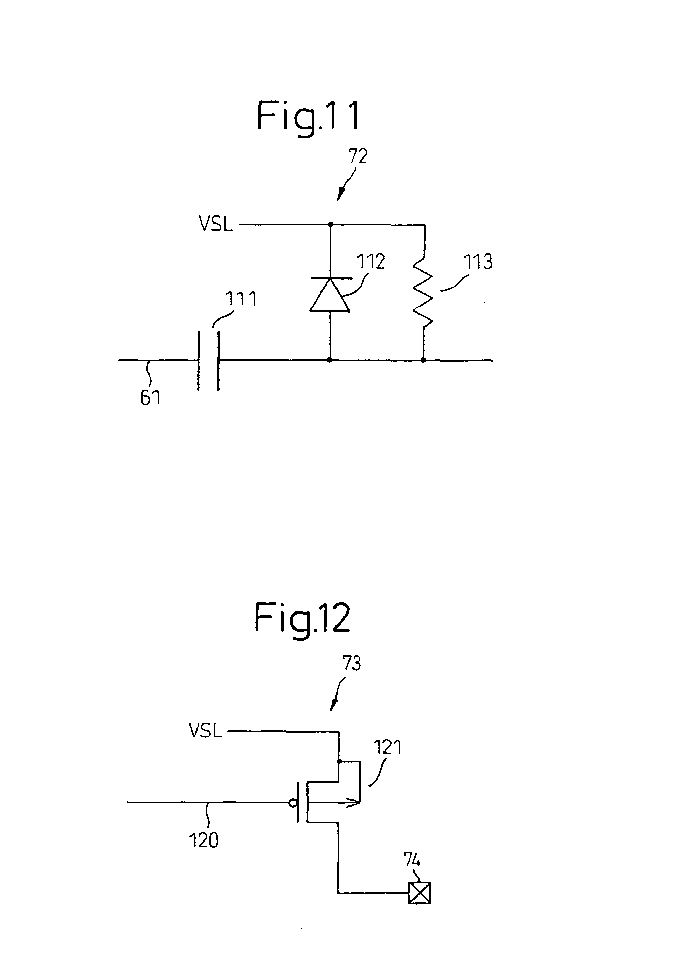

Figure 11 is a circuit diagram showing one example of the clamping circuit forming part of the third output block circuit in the configuration of Figure 6. The clamping circuit 72 is a circuit for clamping the reference signal 61 to VSL. Reference numeral 111 is a capacitor, 112 is a diode, and 113 is a first resistor. One terminal of the capacitor 11 is connected to the reference signal 61, and the other terminal is connected to the cathode of the diode 112 as well as to one end of the first resistor 113; the anode of the diode 112 and the other end of the first resistor 113 are connected to the power supply line of VSL.

Accordingly, in the clamping circuit 72, when the reference signal 61 is at VDL, the diode 112 conducts and the reference signal 61 is clamped to VSL; on the other hand, when the reference signal 61 is at VSL, the diode 112 does not conduct and the potential is held to -VDL, and the resulting signal is supplied to the third output driver circuit 73.

Figure 12 shows one example of the circuit configuration of the third output driver circuit in the configuration of Figure 6. Reference numeral 121 indicates a PMOS-FET. The output 120 of the clamping circuit 72 of Figure 11 is coupled to the gate of the PMOS-FET 121. The source and bulk side of the PMOS-FET 121 is connected to VSL. The drain of the PMOS-FET 121 is the output which is supplied to the VSS 74. As a result, the VSS 74 is the open-drain output of the PMOS-FET 121.

Accordingly, in the third output block circuit 71, when the reference signal 61 is at VDL, the PMOS-FET 121 is non-conducting and the VSS 74 is therefore put in a high impedance state; on the other hand, when the reference signal 61 is at VSL, the PMOS-FET 121 is conducting and the VSS 74 outputs VSL.

The above has described the basic operation of the swinging power supply integrated circuit 18 of the invention shown in Figure 6. However, when actually using the swinging power supply integrated circuit 18 as the power supply generating circuit employing the swinging power supply method, external capacitors must be connected.

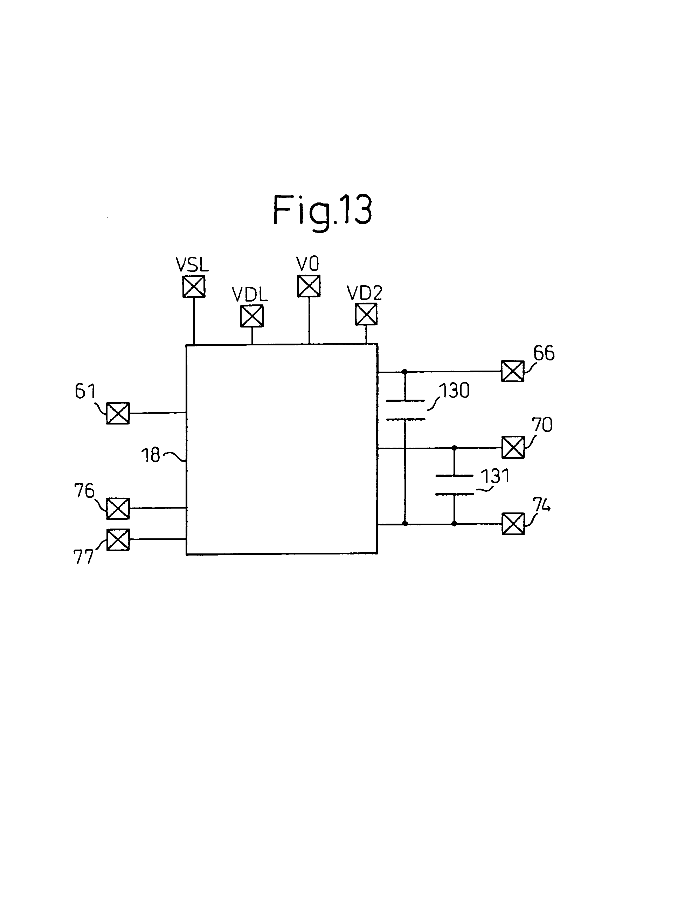

Figure 13 is a block diagram showing the external capacitors connected to the power supply generating circuit of the configuration shown in Figure 6. In the figure, reference numeral 130 indicates the first capacitor, and 131 the second capacitor. One terminal of the first capacitor 130 is connected to the VDD 66, and the other terminal is connected to the VSS 74. On the other hand, one terminal of the second capacitor 131 is connected to the VSS 74, and the other terminal is connected to the VCC 70. The first capacitor 130 and the second capacitor 131 are both chosen to have a suitable capacitance according to the size of the panel used, the driving frequency, etc.

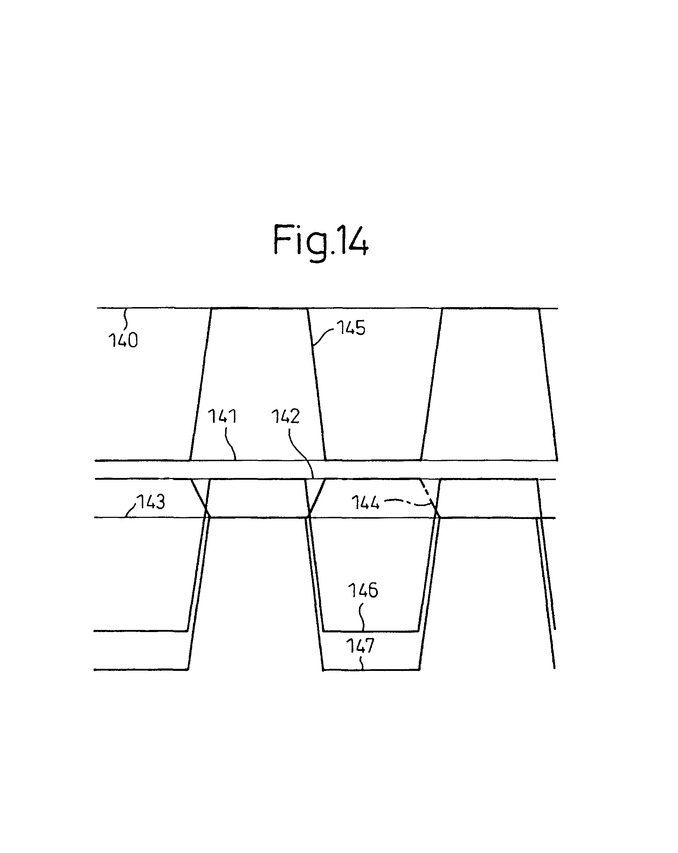

Figure 14 is a diagram showing the swinging power supply waveforms generated by the swinging power supply integrated circuit of the configuration shown in Figure 6. In the figure, reference numeral 140 is V0, 141 is VD2, 142 is VDL, and 143 is VSL. Further, 144 is the reference signal, 145 is VDD, 146 is VCC, and 147 is VSS.

For the outputs VDD (145), VCC (146), and VSS (147), when the reference signal 144 is at VDL, then VDD (145) is at VD2 (146), VCC (146) is at (VDL-(V0-VD2)), and VSS (147) outputs the potential of (VSL-(V0-VD2)). When the reference signal 144 is at VSL, then VDD (145) is at V0 140, VCC (146) is at VDL, and VSS (147) outputs the potential of VSL.

The power supply generation based on the swinging power supply method can thus be achieved by using the swinging power supply integrated circuit constructed as an integrated circuit having the above circuit configuration.

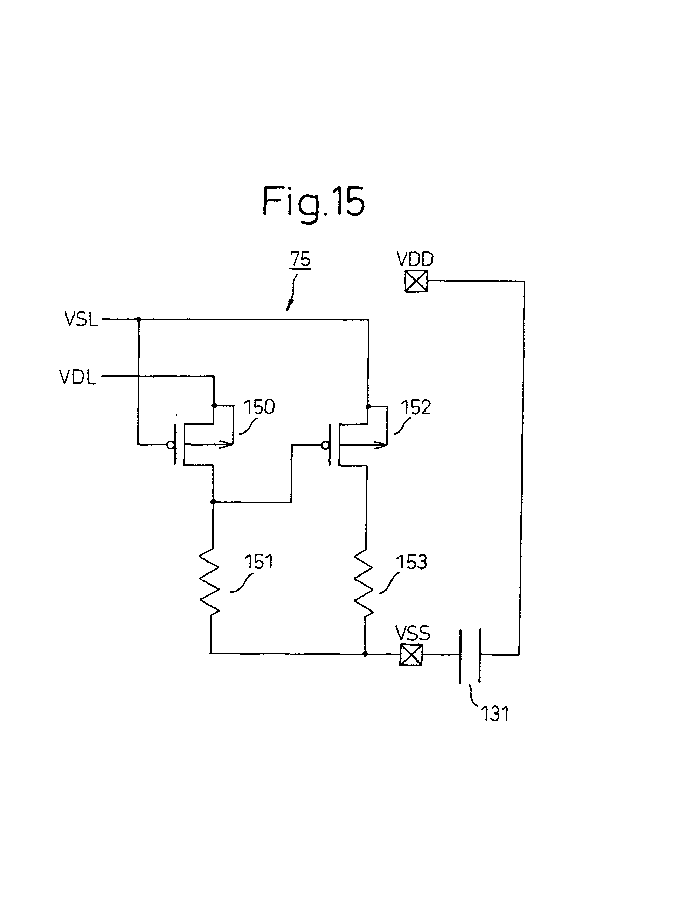

Figure 15 is a circuit diagram showing one example of a discharge circuit in the configuration of Figure 6; the detailed configuration of the discharge circuit 75 shown in Figure 6 is illustrated here. The power supply lines of VDL, VSL, and VSS are connected to the discharge circuit 75. Reference numeral 150 is a PMOS-FET, 151 is a resistor, 152 is a PMOS-FET, and 153 is a resistor. The source and bulk side of the PMOS-FET 150 is connected to VDL, and its gate is connected to VSL. Its drain is connected to the resistor 151 and the PMOS-FET 152. The source and bulk side of the PMOS-FET 152 is connected to VSL, and its drain is connected to the resistor 153. One end of the resistor 151 and one end of the resistor 153 are both connected to VSS. Reference numeral 131 indicates the external capacitor shown in Figure 13.

When the whole system is in operation, that is, when VDL is being input, a potential difference greater than the Vth of the PMOS-FET 150, in this case, the potential difference between VDL and VSL, is being applied to the gate of the PMOS-FET 150, so that the PMOS-FET 150 is conducting. Here, the ratio of the ON resistance value of the conducting PMOS-FET 150 to the resistance value of the resistor 151 is adjusted so as to set the potential at the drain of the PMOS-FET 150 to a voltage at least not smaller than VSL-Vth; therefore, a voltage greater than Vth is not applied to the gate of the PMOS-FET 152, so that the PMOS-FET 152 is put in a non-conducting state. In this way, during the use of the system, VSL and VSS are prevented from conducting through the PMOS-FET 152 and the resistor 153.

When the system is not in operation, that is, when power is cut off, VDL drops toward VSL. When the potential of VDL drops below the Vth of the PMOS-FET 150, the PMOS-FET 150 is put in a non-conducting state.

When the PMOS-FET 150 is non-conducting, the drain potential of the PMOS-FET 150 becomes equal to VSS. Accordingly, VSS is applied to the gate of the PMOS-FET 152. Here, if power is cut off when the reference signal is at VDL, since VSS is greater than the Vth of the PMOS-FET 152, the PMOS-FET 152 is immediately put in the conducting state.

As a result, VSL and VSS conduct through the PMOS-FET 152 and the resistor 153, and the charge stored in the external capacitor 131 is discharged, and VSS becomes substantially equal to the potential of VSL. The resistor 153 acts to prevent destruction of other devices by limiting the current during the discharge, and its resistance need only be set to a suitable value.

With the above operation, even when the power is cut off during the selection operation of the scanning line driving circuit, as the driving voltage being applied can be discharged by the action of the discharge circuit, the DC component can be prevented from being continuously applied.

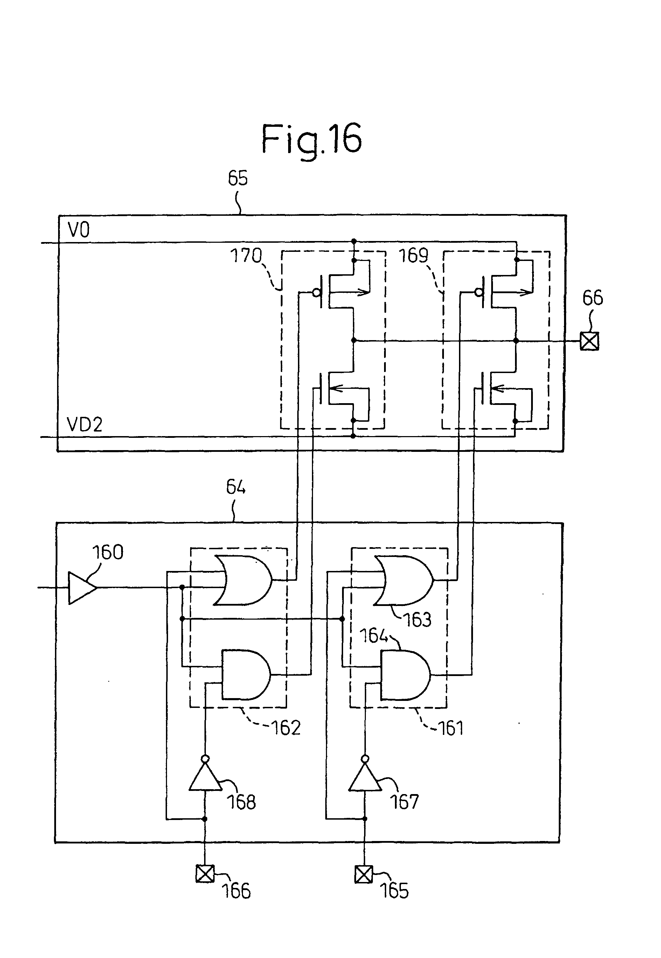

Figure 16 is a circuit diagram showing one example of the first logic circuit and the first output driver circuit forming the first output block circuit in the configuration of Figure 6. Here, reference numeral 64 is the first logic circuit 64 in Figure 6, and 65 is the first output driver circuit 65.

In the first logic circuit 64, 160 indicates a buffer; the output of the level shift circuit 63 shown in Figure 6 is connected to the input of the buffer 160. Reference numeral 161 is a first output selection circuit, and 162 is a second output selection circuit. Each output selection circuit comprises one OR circuit and one AND circuit. That is, 163 is the OR circuit and 164 is the AND circuit, which together constitute the output selection circuit 161. Further, 165 is a first output setting terminal, and 166 is a second output setting terminal. On the other hand, reference numerals 167 and 168 indicate inverters; the input of the inverter 167 is connected to the first output setting terminal 165. The input of the inverter 168 is connected to the second output setting terminal 166.

One input of the OR circuit 163 in the first output selection circuit 161 is connected to the first output setting terminal 165, and the other input is connected to the output of the buffer 160. Similarly, one input of the AND circuit 164 in the first output selection circuit 161 is connected to the output of the inverter 167, and the other input is connected to the output of the buffer 160. To the second output selection circuit 162 are connected the second output setting terminal 166 instead of the first output setting terminal 165, and the output of the inverter 168 instead of the output of the inverter 167; otherwise, the configuration is exactly the same.

Next, the configuration of the first output driver circuit 65 will be described. Reference numeral 169 is a first output driver, and 170 is a second output driver. Basically, the first output driver 169 and the second output driver 170 each have the configuration shown in Figure 9. In the configuration of Figure 9, the PMOS-FET and the NMOS-FET are coupled together by their gates, to which the output 90 from the first logic circuit 64 is input, but in the configuration of Figure 16, their gates are connected to the outputs of the OR circuit and the AND circuit, respectively. One the other hand, the output of the first output driver 169 and the output of the second output driver 170 are coupled together to provide the VDD 66.

As described above, the output of the OR circuit 163 in the first output setting circuit 161 is connected to the gate of the PMOS-FET in the first output driver 169, and the output of the AND circuit 164 is connected to the gate of the NMOS-FET. The outputs of the second output setting circuit 162 are connected to the second output driver 170 in like manner.

Next, a description will be given for the case where the first output setting terminal 165 and the second output setting terminal 166 are both at the high level. As already explained, in the first logic circuit 64, the logic signal level is high when it is V0, and low when VSL.

When the first output setting terminal 165 is at the high level, the output of the OR circuit 163 is high and the output of the AND circuit 164 is low, regardless of whether the input to the buffer 160 is high or low. As a result, the output of the first output driver 169 is in a high impedance state, and the second output driver 170 also exhibits a similar state.

Next, a description will be given for the case where the first output setting terminal 165 and the second output setting terminal 166 are both at the low level. When the first output setting terminal 165 is at the low level, if the input to the buffer 160 is high, the output of the OR circuit 163 and the output of the AND circuit 164 are both high. As a result, the NMOS-FET is selected as the output of the first output driver 169, and VD2 is thus output.

If the input to the buffer 160 is low, the output of the OR circuit 163 and the output of the AND circuit 164 are both low. As a result, the PMOS-FET is selected as the output of the first output driver 169, and V0 is thus output. The second output driver 170 is similar in operation.

Here, consider the case where the first output setting terminal 165 is at the low level and the second output setting terminal 166 is at the high level. In this case, the first driver 169 outputs V0 or VD2, depending on the input polarity of the reference signal. However, the output of the second driver 170 is in the high impedance state, regardless of the input polarity of the reference signal. By so doing, the output impedance can be reduced to one half, compared with the impedance when the first output setting terminal 165 and the second output setting terminal 166 are both at the low level. Accordingly, since the output impedance can be adjusted to an optimum level according to the display panel size, etc. by using the same chip, the impedance does not become lower than necessary, and thus the shoot-through current as well as the power consumption can be reduced. In the present invention, only two output settings are provided, but in the case of three or more output settings, a similar configuration to the one described above can be employed, in which case a more precise setting can be achieved.

### INDUSTRIAL APPLICABILITY

When the power supply generating circuit employing the swinging power supply method is constructed in integrated circuit form and incorporated in the liquid crystal display apparatus, as in the present invention, the power consumption, the size, and the cost can be reduced, and besides, many advantages are offered in design and fabrication and the product reliability improves; therefore, the industrial applicability is extremely high.

## Claims

1. A liquid crystal display apparatus comprising:
a liquid crystal panel constructed by sandwiching a liquid crystal between a first transparent substrate having a plurality of data lines and a second transparent substrate having a plurality of scanning lines crossing said data lines; a data line driving integrated circuit connected to said plurality of data lines; and a scanning line driving integrated circuit for driving said plurality of scanning lines, wherein
said data line driving integrated circuit is mounted on said first transparent electrode substrate, and said scanning line driving integrated circuit is mounted on said second transparent substrate, and wherein an swinging power supply integrated circuit for swinging a power supply potential of said scanning line driving integrated circuit while maintaining a constant amplitude in response to a liquid crystal driving AC signal is provided which is mounted directly on said first transparent substrate or on said second transparent substrate.

2. A liquid crystal display apparatus as set forth in claim 1, wherein said swinging power supply integrated circuit is constructed from a single chip, and is mounted directly on said second transparent substrate.

3. A liquid crystal display apparatus as set forth in claim 1 or 2, wherein said swinging power supply integrated circuit takes as inputs said liquid crystal driving AC signal and an output of a step-up circuit that defines the amplitude of said swinging power supply.

4. A liquid crystal display apparatus as set forth in claim 1 or 2, wherein said swinging power supply integrated circuit comprises: three output block circuits consisting of a first output block circuit, a second output block circuit, and a third output block circuit; and one discharge block circuit, and wherein
said first output block circuit comprises:
a level shift circuit which converts the amplitude of an externally supplied reference signal into a prescribed amplitude; a first logic circuit which controls the timing of said reference signal whose level has been converted by said level shift circuit; and a first output driver circuit which delivers an output of said first logic circuit,
said second output block circuit comprises: a second logic circuit which controls the timing of said reference signal; and a second output driver circuit which outputs a value of said second logic circuit,
said third output block circuit comprises: a clamping circuit which clamps said reference signal; and a third output driver circuit which outputs a value of said clamping circuit, and
said discharge block circuit comprises: a detection circuit which detects a system power supply being turned off; and a discharge circuit which short-circuits said third output driver circuit by a signal detected by said detection circuit.

5. A liquid crystal display apparatus as set forth in claim 1 or 2, wherein said swinging power supply integrated circuit comprises: three output block circuits consisting of a first output block circuit, a second output block circuit, and a third output block circuit; and one discharge block circuit, and wherein
said first output block circuit comprises:
a level shift circuit which converts the amplitude of an externally supplied reference signal into a prescribed amplitude; a first logic circuit which controls the timing of said reference signal whose level has been converted by said level shift circuit; and a first output driver circuit constructed from an inverter whose gate is connected to a signal output from said first logic circuit,
said second output block circuit comprises: a second logic circuit which controls the timing of said reference signal; and a second output driver circuit constructed from an open-drain circuit of a first PMOS-FET whose gate is connected to a signal output from said second logic circuit,
said third output block circuit comprises: a clamping circuit which clamps said reference signal; and a third output driver circuit constructed from an open-drain circuit of a second PMOS-FET whose gate is connected to a signal output from said clamping circuit, and
said discharge block circuit comprises: a detection circuit which detects a system power supply being turned off; and a discharge circuit which short-circuits said third output driver circuit by a signal detected by said detection circuit.

6. A liquid crystal display apparatus as set forth in claim 4 or 5, wherein said clamping circuit has a configuration such that one end of a capacitor is connected to said supplied reference signal and the other end thereof is connected to a cathode of a first diode, one end of a first resistor, and the gate of said second PMOS-FET, while an anode of said first diode and the other end of said first resistor are connected to a source and bulk of said second PMOS-FET.

7. A liquid crystal display apparatus as set forth in claim 4 or 5, wherein said discharge block circuit has a circuit configuration such that a source and bulk of a third PMOS-FET are connected to a source and bulk of said first PMOS-FET, a gate of said third PMOS-FET is connected to a source and bulk of said second PMOS-FET, and a drain of said third PMOS-FET is connected to a second resistor and a gate of a fourth PMOS-FET, while a source and bulk of said fourth PMOS-FET are connected to the source and bulk of said second PMOS-FET and a drain of said fourth PMOS-FET is connected to a third resistor whose one end is connected to said second resistor and a drain of said second PMOS-FET.

8. A liquid crystal display apparatus as set forth in claim 4 or 5, wherein said first output block circuit comprises a plurality of PMOS-FETs and a plurality of NMOS-FETs, and wherein an output selection circuit having a function that can always turn off part of said plurality of PMOS-FETs and part of said plurality of NMOS-FETs by an external output setting terminal independently of said reference signal is provided at a gate input of each of said PMOS-FETs and said NMOS-FETs.
